(19) Europäisches Patentamt / European Patent Office / Office européen des brevets

(11) **EP 3 336 143 A1**

(12) **EUROPEAN PATENT APPLICATION**
published in accordance with Art. 153(4) EPC

(43) Date of publication:
**20.06.2018 Bulletin 2018/25**

(21) Application number: **16835157.5**

(22) Date of filing: **08.08.2016**

(51) Int Cl.:
***C08L 23/16*** *(2006.01)* ***C08F 4/68*** *(2006.01)*
***C08F 210/06*** *(2006.01)* ***C08K 5/17*** *(2006.01)*

(86) International application number:
**PCT/JP2016/073349**

(87) International publication number:
**WO 2017/026460 (16.02.2017 Gazette 2017/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **11.08.2015 JP 2015158836**

(71) Applicant: **Sumitomo Chemical Company, Limited**
**Tokyo 104-8260 (JP)**

(72) Inventors:
- **WATANABE, Kenta**
  **Ichihara-shi**
  **Chiba 299-0195 (JP)**
- **NAKANO, Sadayuki**
  **Ichihara-shi**
  **Chiba 299-0195 (JP)**

(74) Representative: **Vossius & Partner**
**Patentanwälte Rechtsanwälte mbB**
**Siebertstrasse 3**
**81675 München (DE)**

# (54) ETHYLENE-ALPHA-OLEFIN COPOLYMER RUBBER, RUBBER COMPOSITION, AND METHOD FOR PRODUCING ETHYLENE-ALPHA-OLEFIN COPOLYMER RUBBER

(57) Disclosed is an ethylene-α-olefin-based copolymer rubber which contains an ethylene unit and an α-olefin unit having from 3 to 20 carbon atoms and satisfies the following requirements (a) and (b).

Requirement (a): a content of the α-olefin unit is 50% by mass or more and 70% by mass or less when a sum of a content of the ethylene unit and the content of the α-olefin unit is taken as 100% by mass;

Requirement (b): a product of monomer reactivity ratios which is a product of a reactivity ratio of ethylene and a reactivity ratio of an α-olefin is 0.70 or less and the product of monomer reactivity ratios is a value determined from a $^{13}C$-NMR spectrum.

**Fig.1**

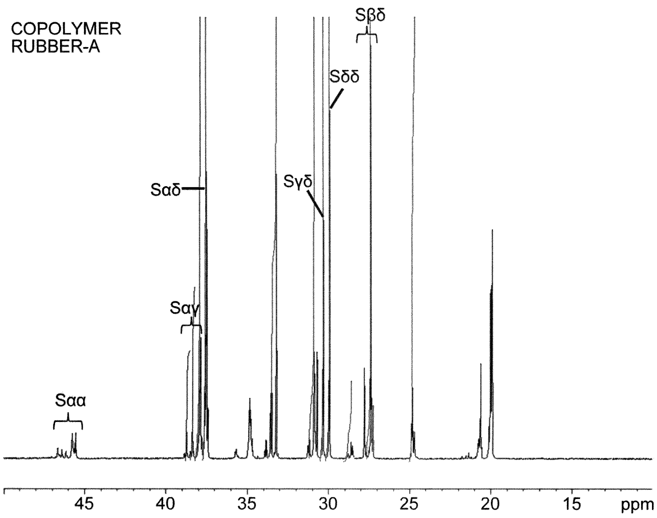


EP 3 336 143 A1

## Description

### Technical Field

The present invention relates to an ethylene-α-olefin-based copolymer rubber, a rubber composition, and a method for producing an ethylene-α-olefin-based copolymer rubber.

### Background Art

Ethylene-α-olefin-based copolymer rubbers typified by an ethylene-α-olefin copolymer rubber or an ethylene-α-olefin-nonconjugated polyene copolymer rubber are widely used in applications such as automobile parts and building materials. Ethylene-α-olefin-based copolymer rubbers are used in, for example, applications of various kinds of rubber hoses such as a radiator hose for cooling engines, a drain hose for radiator overflow, a heater hose for indoor heating, an air conditioning drain hose, wiper water supply hose, a roof drain hose, and a protective hose, which are mounted on an automobile, a motorbike, an industrial machine, a construction machine, an agricultural machine, and the like.

The performance required to the rubber parts such as rubber hoses as described above has been increased year by year. For example, rubber parts to be used in cold districts are required to exhibit superior cold resistance than before. For this reason, investigations in order to meet the performance required have been carried out. For example, in Patent Literature 1, a method for producing an ethylene-α-olefin-based copolymer rubber is described and specifically a method for producing an ethylene-α-olefin-based copolymer rubber in which a mixed solution is obtained by stirring and mixing a vanadium compound-containing solution and an alcohol-containing solution from 10 to 600 seconds, the mixed solution is immediately supplied to a polymerization tank containing an organic aluminum compound, and ethylene and an α-olefin or ethylene, an α-olefin, and a nonconjugated diene compound are copolymerized in the polymerization tank is described.

### Citation List

### Patent Literature

Patent Literature 1: Japanese Unexamined Patent Application Publication No. H7-126326

### Summary of Invention

### Technical Problem

However, a molded body formed of a rubber composition containing a conventional ethylene-α-olefin-based copolymer rubber is not necessarily sufficient from the viewpoint of cold resistance of maintaining the properties as a rubber at a low temperature. When the cold resistance is insufficient, for example, there is a case in which it is difficult for the molded body to sufficiently recover the original shape after being released from the load when the molded body is deformed under load at a low temperature.

Under such circumstances, the present invention provides an ethylene-α-olefin-based copolymer rubber and a rubber composition that are capable of forming a molded body exhibiting excellent cold resistance, and a method for producing the ethylene-α-olefin-based copolymer rubber.

### Solution to Problem

An aspect of the present invention provides an ethylene-α-olefin-based copolymer rubber that contains an ethylene unit and an α-olefin unit having from 3 to 20 carbon atoms and satisfies the following requirements (a) and (b).

Requirement (a): a content of the α-olefin unit is 50% by mass or more and 70% by mass or less when a sum of a content of the ethylene unit and the content of the α-olefin unit is taken as 100% by mass;

Requirement (b): a product of monomer reactivity ratios which is a product of a reactivity ratio of ethylene and a reactivity ratio of an α-olefin is 0.70 or less, and the product of monomer reactivity ratios is a value determined from a $^{13}C$-NMR spectrum.

A proportion of an integral elution amount from -15°C to 40°C with respect to a total elution amount may be 80% or more and 100% or less when an elution amount of the ethylene-α-olefin-based copolymer rubber is measured at each elution temperature while stepwisely increasing the elution temperature from -15°C to 160°C by temperature gradient interaction chromatography.

The ethylene-α-olefin-based copolymer rubber may further contain a nonconjugated polyene unit.

Another aspect of the present invention provides a rubber composition containing an ethylene-α-olefin-based copolymer rubber satisfying the requirements (a) and (b) described above.

The rubber composition may further contain an amine-based antioxidant and/or a sulfur-based antioxidant.

Still another aspect of the present invention provides a method for producing an ethylene-α-olefin-based copolymer rubber satisfying the requirement (a) described above. This method includes a step of copolymerizing a monomer mixture containing ethylene and an α-olefin in the presence of a catalyst obtained by bringing a vanadium compound represented by the following formula (1) into contact with an organic aluminum compound represented by the following formula (2).

$$VO(OR)_mX_{3-m} \cdots\cdots \quad (1)$$

wherein R represents a linear hydrocarbon group having from 1 to 8 carbon atoms, X represents a halogen atom, and m represents a number satisfying $0 < m \leq 3$.

$$R''_jAlX''_{3-j} \cdots\cdots \quad (2)$$

wherein R" represents a hydrocarbon group, X" represents a halogen atom, and j represents a number satisfying $0 < j \leq 3$.

## Advantageous Effects of Invention

According to the present invention, an ethylene-α-olefin-based copolymer rubber capable of forming a molded body exhibiting excellent cold resistance is provided. A rubber composition containing an ethylene-α-olefin-based copolymer rubber according to an aspect of the present invention can form a molded body exhibiting excellent cold resistance even at a low temperature of, for example, -20°C or lower.

## Brief Description of Drawings

FIG. 1 illustrates a $^{13}$C-NMR spectrum of a copolymer rubber-A in Example 1.

FIG. 2 is a graph illustrating the relationship between dW/dT of a copolymer rubber-A and the elution temperature T in Example 1.

## Description of Embodiments

Hereinafter, embodiments of the present invention will be described. However, the present invention is not limited to the following embodiments.

Ethylene-α-Olefin-based Copolymer Rubber (Component (A))

An ethylene-α-olefin-based copolymer rubber (hereinafter also referred to as a "component (A)") according to an embodiment contains an ethylene unit and an α-olefin unit having from 3 to 20 carbon atoms as main monomer units. The total content of the ethylene unit and the α-olefin unit in the ethylene-α-olefin-based copolymer rubber is preferably 60% by mass or more and 100% by mass or less, or 80% by mass or more and 100% by mass or less with respect to the total mass of the copolymer rubber. The ethylene-α-olefin-based copolymer rubber may be, for example, an ethylene-α-olefin-based copolymer rubber containing an ethylene unit and an α-olefin unit or an ethylene-α-olefin-nonconjugated polyene copolymer rubber containing an ethylene unit, an α-olefin unit, and a nonconjugated polyene unit. In the present specification, the term "monomer name + unit" such as the "ethylene unit", "α-olefin unit", or "nonconjugated polyene unit" means a "monomer unit based on the monomer".

This ethylene-α-olefin-based copolymer rubber satisfies the following requirements (a) and (b).

Requirement (a): the content of the α-olefin unit is 50% by mass or more and 70% by mass or less when the sum of the content of the ethylene unit and the content of the α-olefin unit is taken as 100% by mass;

Requirement (b): the product of monomer reactivity ratios which is the product of the reactivity ratio of ethylene and the reactivity ratio of the α-olefin is 0.70 or less and the product of monomer reactivity ratios is a value determined from the $^{13}$C-NMR spectrum.

Specific examples of the α-olefin constituting the ethylene-α-olefin-based copolymer rubber may include linear olefins such as propylene, 1-butene, 1-pentene, 1-hexene, 1-heptene, 1-octene, 1-nonene, and 1-decene; branched chain olefins such as 3-methyl-1-butene, 3-methyl-1-pentene, and 4-methyl-1-pentene; and cyclic olefins such as vinylcyclohexane. These may be used singly or in combination. The α-olefin is preferably propylene and/or 1-butene and more preferably propylene from the viewpoint of obtaining a copolymer rubber capable of forming a molded body exhibiting

superior cold resistance.

The ethylene-α-olefin-based copolymer rubber may further contain a nonconjugated polyene unit from the viewpoint of obtaining a copolymer rubber capable of forming a molded body exhibiting superior cold resistance. The nonconjugated polyene is preferably a nonconjugated polyene having from 3 to 20 carbon atoms. Specific examples of the nonconjugated polyene include

chain unconjugated dienes such as 1,4-hexadiene, 1,6-octadiene, 2-methyl-1,5-hexadiene, 6-methyl-1,5-heptadiene and 7-methyl-1,6-octadiene;

cyclic nonconjugated dienes such as cyclohexadiene, dicyclopentadiene, 5-vinylnorbomene, 5-ethylidene-2-norbornene, 5-(2-propenyl)-2-norbornene, 5-(3-butenyl)-2-norbornene, 5-(4-pentenyl)-2-norbornene, 5-(5-hexenyl)-2-norbornene, 5-(6-heptenyl)-2-norbornene, 5-(7-octenyl)-2-norbornene, 5-methylene-2-norbornene, and 6-chloromethyl-5-isopropenyl-2-norbornene; and

trienes such as 4-ethylidene-8-methyl-1,7-nonadiene, 5,9,13-trimethyl-1,4,8,12-tetradecadiene, 4-ethylidene-12-methyl-1,11-pentadecadiene, 2,3 -diisopropylidene-5-norbornene, 2-ethylidene-3-isopropylidene-5-norbornene, 2-propenyl-2,2-norbornadiene, 1,3,7-octatriene, 6,10-dimethyl-1,5,9-undecatriene, 5,9-dimethyl-1,4,8-decatriene, 13-ethyl-9-methyl-1,9,12-pentadecatriene, 5,9,8,14,16-pentamethyl-1,7,14-hexadecatriene, and 1,4,9-decatriene. These may be used singly or in combination. Among these, 5-ethylidene-2-norbornene, dicyclopentadiene, 5-vinylnorbomene, or any combination thereof is preferable.

The content of the α-olefin unit in the ethylene-α-olefin-based copolymer rubber is 50% by mass or more and 70% by mass or less. The cold resistance of the molded body to be obtained can be improved as the content of the α-olefin unit is 50% by mass or more. The durability of the molded body to be obtained can be improved as the content of the α-olefin unit is 70% by mass or less. From the same viewpoint, the content of the α-olefin unit is preferably 51% by mass or more and 65% by mass or less, and more preferably 52% by mass or more and 65% by mass or less. The content of the ethylene unit may be 30% by mass or more and 50% by mass or less, 35% by mass or more and 49% by mass or less, or 35% by mass or more and 48% by mass or less. These contents mean values when the sum of the content of the ethylene unit and the content of the α-olefin unit is taken as 100% by mass.

The content of the nonconjugated polyene unit in the ethylene-α-olefin-based copolymer rubber may be 0 or more and 40 or less in terms of iodine value (unit: g/100 g of copolymer rubber). The weather resistance of the molded body to be obtained can be improved as the content of the nonconjugated polyene unit is 40 or less in terms of iodine value. From the same viewpoint, the content of the nonconjugated polyene unit is preferably 0 or more and 35 or less, more preferably 0 or more and 30 or less, and still more preferably 0 or more and 25 or less in terms of iodine value.

The product of the monomer reactivity ratios of the ethylene-α-olefin-based copolymer rubber according to an embodiment is 0.70 or less. This product of the monomer reactivity ratios is a product rlr2 of a reactivity ratio r1 of ethylene and a reactivity ratio r2 of the α-olefin, and it is a standard indicator representing the degree of irregular polymerization in copolymers.

The details on the monomer reactivity ratio are discussed in, for example, "Textbook of Polymer Chemistry", F. W. Billmeyer, Jr., Interscience Publishers, New York, 1957, page 221 et sequens. The "monomer reactivity ratio" in the Billmeyer's text, for example, with regard to a copolymer constituted by a first monomer M1 (for example, ethylene) and a second monomer M2 (for example, α-olefin), the reactivity ratio r1 of the first monomer M1 is defined as the ratio of the probability that the polymer chain in which the first monomer M1 is positioned at the terminal (hereinafter also referred to as a "M1 terminal copolymer chain") reacts with the first monomer M1 with respect to the probability that the M1 terminal copolymer chain reacts with the second monomer M2. The fact that r1 is larger than 1 means that the M1 terminal copolymer chain tends to easily react with the first monomer (M1). The fact that r1 is smaller than 1 means that the M1 terminal copolymer chain tends to easily react with the second monomer (M2). The same consideration applies to r2 as well. The above consideration generally applies to the copolymerization leading to the ethylene-α-olefin-based copolymer rubber of the present embodiment. This reference further describes the product r1r2 of the monomer reactivity ratios. The fact that r1r2 is zero means that a completely alternating copolymer is formed. The fact that the numerical value of r1r2 is 1 means that a completely irregular copolymer is formed. In a case in which the numerical value of rlr2 is larger than 1, the copolymer contains a block in which two or more ethylene or propylene are continuously bonded. It means that the blocking property of the copolymer increases, that is, the copolymer contains a block at a larger proportion as the numerical value of rlr2 increases. The mathematical derivation of rlr2 is described in the above reference.

rlr2 of the ethylene-α-olefin-based copolymer rubber can be determined based on the nuclear magnetic resonance (NMR) spectrum, particularly the $^{13}C$-NMR spectrum as described in Kakugo et al., Macromolecules 15 1150-1152 (1982). In the present embodiment, a determination method by the $^{13}C$-NMR spectrum was employed. The details on the method for determining the product of reactivity ratios will be described in Examples later.

The fact that the product rlr2 of the monomer reactivity ratios is 0.70 or less means that the ethylene-α-olefin-based copolymer rubber contains a moiety in which ethylene and an α-olefin are alternately copolymerized in a relatively large number. The fact that the product of the monomer reactivity ratios is 0.70 or less contributes to the improvement in cold resistance of the molded body. From the same viewpoint, the product of the monomer reactivity ratios is preferably

0.60 or less, more preferably 0.50 or less, and still more preferably 0.40 or less. The lower limit value of the product of the monomer reactivity ratios is 0. The product of monomer reactivity ratios may be 0.01 or more. When the product of the monomer reactivity ratios is 0.01 or more, there is a tendency that the molecular weight at the time of polymerization is likely to increase and it is easy to produce the ethylene-α-olefin-based copolymer rubber according to the present embodiment.

The molecular weight distribution (Mw/Mn) of the ethylene-α-olefin-based copolymer is preferably 1.5 or more and 5.0 or less, more preferably 1.8 or more and 4.0 or less, and still more preferably 2.0 or more and 3.0 or less. Favorable roll processability of the rubber composition is likely to be obtained when the molecular weight distribution is 1.5 or more. It is possible to further improve the cold resistance of the molded body when the molecular weight distribution is 5.0 or less. It is possible to adjust the molecular weight distribution by changing the polymerization conditions.

The molecular weight distribution in the present specification is a ratio (Mw/Mn) calculated from the weight average molecular weight (Mw) and number average molecular weight (Mn) which are expressed in terms of polystyrene and measured by gel permeation chromatography (GPC method).

Examples of the conditions for the measurement of weight average molecular weight and number average molecular weight by the GPC method may include the following conditions.

- GPC apparatus: trade name HLC-8121 GPC/HT manufactured by Tosoh Corporation
- Column: TSKgel GMHHR-H(S)HT manufactured by Tosoh Corporation
- Molecular weight standard substance: polystyrene having molecular weight of 500 or more and 20,000,000 or less
- Flow velocity of eluting solvent: 1.0 mL/min
- Sample concentration: 1 mg/mL
- Measurement temperature: 140°C
- Eluting solvent: orthodichlorobenzene
- Injection volume: 500 μL
- Detector: differential refractometer

The intrinsic viscosity of the ethylene-α-olefin-based copolymer rubber measured in tetralin at 135°C is preferably 1.0 dl/g or more and 4.0 dl/g or less, more preferably 1.5 dl/g or more and 3.0 dl/g or less, and still more preferably 1.5 dl/g or more and 2.5 dl/g or less. The cold resistance of the molded body tends to be further enhanced when the intrinsic viscosity is 1.0 dl/g or more. The roll processability of the rubber composition tends to be improved when the intrinsic viscosity is 4.0 dl/g or less.

When the elution amount (% by mass) of the ethylene-α-olefin-based copolymer rubber is measured at each elution temperature T while stepwisely increasing the elution temperature from -15°C to 160°C by temperature gradient interaction chromatography (hereinafter also referred to as "TGIC"), a W-T curve representing the relationship between the elution temperature T and the integral elution amount W which is a value obtained by integrating the elution amounts from -15°C to the respective elution temperatures T is determined, and further, a dW/dT-T curve (the ordinate: dW/dT and the abscissa: elution temperature T) representing the relationship between the elution temperature T and the value dW/dT obtained by differentiating the integral elution amount W with respect to the elution temperature T on the W-T curve is determined, it is possible to improve the cold resistance of the ethylene-α-olefin-based copolymer rubber based on these W-T curve and dW/dT-T curve.

The peak height (maximum value) of the maximum peak indicated on the dW/dT-T curve is preferably 1 or more, more preferably 3 or more, still more preferably 4 or more, and particularly preferably 4.5 or more from the viewpoint of improvement in the cold resistance. From the same viewpoint, the peak height is preferably 10 or less, more preferably 7 or less, and still more preferably 6 or less.

The peak top temperature of the maximum peak indicated on the dW/dT-T curve is preferably 0°C or higher and 50°C or lower, more preferably 0°C or higher and 40°C or lower, still more preferably 0°C or higher and 35°C or lower, and particularly preferably 0°C or higher and 30°C or lower from the viewpoint of improvement in the cold resistance. Here, the peak top temperature means an elution temperature at which dW/dT at the peak indicated on the dW/dT-T curve has the maximum value.

In the relationship between the elution temperature and the elution amount of the ethylene-α-olefin-based copolymer rubber obtained by TGIC described above, the proportion of the integral elution amount W from an elution temperature of -15°C to an elution temperature of 40°C with respect to the total elution amount is preferably 80% or more and 100% or less, more preferably 85% or more and 100% or less, still more preferably 90% or more and 99.9% or less, and particularly preferably 92% or more and 99.9% or less from the viewpoint of improvement in the cold resistance. Here, the total elution amount means the integral elution amount from -15°C to 160°C.

In the relationship between the elution temperature and the elution amount of the ethylene-α-olefin-based copolymer rubber obtained by TGIC described above, the difference (T(80) - T(20)) between the elution temperature (T(80)°C) at which the proportion of the integral elution amount W with respect to the total elution amount reaches 80%

and the elution temperature (T(20)°C) at which the proportion of the integral elution amount W with respect to the total elution amount reaches 20% is preferably 1°C or higher and 40°C or lower, more preferably 1°C or higher and 30°C or lower, still more preferably 1°C or higher and 20°C or lower, particularly preferably 1°C or higher and 16°C or lower from the viewpoint of improvement in the cold resistance.

TGIC is an analysis method (for example, see Cong, et al., Macromolecules, 2011, 44 (8), 3062-3072) that can be applied to a polymer having an amorphous region which is difficult to be analyzed by temperature rising elution fractionation (hereinafter also referred to as "TREF").

Analysis of the ethylene-α-olefin-based copolymer rubber by TGIC is conducted by cross-fractionation chromatography (CFC) equipped with a TREF column. The specific analysis procedure and analysis conditions are presented below.

Analysis Procedure

(1) A sample solution is prepared by dissolving the ethylene-α-olefin-based copolymer rubber in orthodichlorobenzene.
(2) The sample solution is injected into the TREF column (temperature: 165°C) of the CFC apparatus and held for 20 minutes.
(3) The temperature of the TREF column is decreased to -15°C at a rate of 20°C/min and held at -15°C for 30 minutes and the elution amount (% by mass) at -15°C is measured with an infrared spectrophotometer.
(4) The temperature of the TREF column is stepwisely increased from -15°C to 160°C at a rate of 40°C/min and held at each elution temperature for 19 minutes and the elution amount (% by mass) at each elution temperature is measured with an infrared spectrophotometer. The elution temperature is set to be 37 stages to be presented below.

Analysis Conditions

Apparatus: Automated 3D Analyzer CFC-2 manufactured by Polymer Characterization, S.A.

TREF column: Hypercarb Column for High Temperature (50 × 10 mm, 35005-059046) manufactured by Thermo Fisher Scientific Inc.

GPC column: three pieces of GMHHR-H(S) manufactured by Tosoh Corporation

Detector: Infrared Spectrophotometer IR5 manufactured by Polymer Characterization, S.A.

Eluent: orthodichlorobenzene (for high performance liquid chromatography)

Sample concentration: 20 mg/20 mL

Injection volume: 0.5 mL

Flow rate: 1.0 mL/min.

Elution temperature: -15, -10, -5, 0, 4, 8, 12, 16, 20, 24, 28, 32, 36, 40, 43, 46, 49, 52, 55, 58, 61, 64, 67, 70, 73, 76, 79, 82, 85, 90, 95, 100, 110, 120, 140, 150, and 160°C.

Specific examples of the ethylene-α-olefin-based copolymer rubber include an ethylene-propylene copolymer rubber, an ethylene-propylene-5-ethylidene-2-norbornene copolymer rubber, an ethylene-propylene-dicyclopentadiene copolymer rubber, an ethylene-propylene-1,4-hexadiene copolymer rubber, an ethylene-propylene-1,6-octadiene copolymer rubber, an ethylene-propylene-2-methyl-1,5-hexadiene copolymer rubber, an ethylene-propylene-6-methyl-1,5-heptadiene copolymer rubber, an ethylene-propylene-7-methyl-1,6-octadiene copolymer rubber, an ethylene-propylene-cyclohexadiene copolymer rubber, an ethylene-propylene-5-vinyl norbornene copolymer rubber, an ethylene-propylene-5-(2-propenyl)-2-norbornene copolymer rubber, an ethylene-propylene-5-(3-butenyl)-2-norbornene copolymer rubber, an ethylene-propylene-5-(4-pentenyl)-2-norbornene copolymer rubber, an ethylene-propylene-5-(5-hexenyl)-2-norbornene copolymer rubber, an ethylene-propylene-5-(6-heptenyl)-2-norbornene copolymer rubber, an ethylene-propylene-5-(7-octenyl)-2-norbornene copolymer rubber, an ethylene-propylene-5-methylene-2-norbornene copolymer rubber, an ethylene-propylene-4-ethylidene-8-methyl-1,7-nonadiene copolymer rubber, an ethylene-propylene-5,9,13-trimethyl-1,4,8,12-tetradecadiene copolymer rubber, an ethylene-propylene-4-ethylidene-12-methyl-1,11-pentadecadiene copolymer rubber, an ethylene-propylene-6-chloromethyl-5-isopropenyl-2-norbomene copolymer rubber, an ethylene-propylene-2,3-diisopropylidene-5-norbornene copolymer rubber, an ethylene-propylene-2-ethylidene-3-isopropylidene-5-norbornene copolymer rubber, an ethylene-propylene-2-propenyl-2,2-norbornadiene copolymer rubber, an ethylene-propylene-1,3,7-octatriene copolymer rubber, an ethylene-propylene-6,10-dimethyl-1,5,9-undecatriene copolymer rubber, an ethylene-propylene-5,9-dimethyl-1,4,8-decatriene copolymer rubber, an ethylene-propylene-13-ethyl-9-methyl-1,9,12-pentadecatriene copolymer rubber, an ethylene-propylene-5,9,8,14,16-pentamethyl-1,7,14-hexadecatriene copolymer rubber, and an ethylene-propylene-1,4,9-decatriene copolymer rubber. These may be used singly or in combination.

Among these, the component (A) preferably contains an ethylene-propylene copolymer rubber, an ethylene-propylene-5-ethylidene-2-norbornene copolymer rubber, an ethylene-propylene-dicyclopentadiene copolymer rubber, an ethylene-propylene-5-vinylnorbornene copolymer rubber, or any combination thereof and the component (A) more preferably contains an ethylene-propylene copolymer rubber and/or an ethylene-propylene-5-ethylidene-2-norbornene copolymer rubber.

In a case in which the component (A) contains two or more kinds of ethylene-α-olefin-based copolymer rubbers, the content of the ethylene unit, the content of the α-olefin unit, and the iodine value described above are the values in the sum of the combination of these two or more kinds.

Incidentally, the component (A) may be used as an oil extended rubber by adding a process oil such as a paraffin-based oil or a naphthene-based oil to the component (A).

Method for Producing Ethylene-α-Olefin-based copolymer Rubber

The method for producing the ethylene-α-olefin-based copolymer rubber of the present embodiment is not particularly limited, and for example, it can include a step of copolymerizing a monomer mixture containing ethylene, an α-olefin, and if necessary, a nonconjugated polyene in the presence of a so-called Ziegler Natta catalyst or a catalyst such as a metallocene catalyst.

As a catalyst for the copolymerization, it is preferable to use a catalyst obtained by bringing a vanadium compound represented by the following formula (1) into contact with an organic aluminum compound represented by the following formula (2). This makes it possible to easily produce an ethylene-α-olefin-based copolymer rubber having a lower product of monomer reactivity ratios. For example, when an ethylene-α-olefin-based copolymer rubber satisfying the requirement (a) is produced by using this catalyst, it is possible to easily produce a copolymer rubber having a product of monomer reactivity ratios of 0.70 or less.

$$VO(OR)_mX_{3-m} \cdots\cdots \qquad (1)$$

In the formula, R represents a linear hydrocarbon group having from 1 to 8 carbon atoms, X represents a halogen atom, and m represents a number satisfying $0 < m \leq 3$.

$$R''_jAlX''_{3-j} \cdots\cdots \qquad (2)$$

In the formula, R'' represents a hydrocarbon group, X'' represents a halogen atom, and j represents a number satisfying $0 < j \leq 3$.

Specific examples of R in the formula (1) include a methyl group, an ethyl group, a n-propyl group, a n-butyl group, a n-pentyl group, and a n-hexyl group. Among these, a linear alkyl group having from 1 to 3 carbon atoms is preferable. Examples of X include a fluorine atom and a chlorine atom. m is preferably a number satisfying $1 \leq m \leq 2$.

Specific examples of the vanadium compound represented by the formula (1) may include $VO(OCH_3)Cl_2$, $VO(OC_2H_5)Cl_2$, $VO(O(n\text{-}C_3H_7))Cl_2$, $VO(O(n\text{-}C_4H_9))Cl_2$, $VO(O(n\text{-}C_5H_{11}))Cl_2$, $VO(O(n\text{-}C_6H_{13}))Cl_2$, $VO(O(n\text{-}C_7H_{15}))Cl_2$, $VO(O(n\text{-}C_8H_{17}))Cl_2$, $VO(OCH_3)_{0.5}Cl_{2.5}$, $VO(OC_2H_5)_{0.5}Cl_{2.5}$, $VO(O(n\text{-}C_3H_7))_{0.5}Cl_{2.5}$, $VO(O(n\text{-}C_4H_9))_{0.5}Cl_{2.5}$, $VO(O(n\text{-}C_5H_{11}))_{0.5}Cl_{2.5}$, $VO(O(n\text{-}C_6H_{13}))_{0.5}Cl_{2.5}$, $VO(O(n\text{-}C_7H_{15}))_{0.5}Cl_{2.5}$, $VO(O(n\text{-}C_8H_{17}))_{0.5}Cl_{2.5}$, $VO(OCH_3)_{1.5}Cl_{1.5}$, $VO(OC_2H_5)_{1.5}Cl_{1.5}$, $VO(O(n\text{-}C_3H_7))_{1.5}Cl_{1.5}$, $VO(O(n\text{-}C_4H_9))_{1.5}Cl_{1.5}$, $VO(O(n\text{-}C_5H_{11}))_{1.5}Cl_{1.5}$, $VO(O(n\text{-}C_6H_{13}))_{1.5}Cl_{1.5}$, $VO(O(n\text{-}C_7H_{15}))_{1.5}Cl_{1.5}$, $VO(O(n\text{-}C_8H_{17}))_{1.5}Cl_{1.5}$, $VO(OCH_3)_{0.8}Cl_{2.2}$, $VO(OC_2H_5)_{0.8}Cl_{2.2}$, $VO(O(n\text{-}C_3H_7))_{0.8}Cl_{2.2}$, $VO(O(n\text{-}C_4H_9))_{0.8}Cl_{2.2}$, $VO(O(n\text{-}C_5H_{11}))_{0.8}Cl_{2.2}$, $VO(O(n\text{-}C_6H_{13}))_{0.8}Cl_{2.2}$, $VO(O(n\text{-}C_7H_{15}))_{0.8}Cl_{2.2}$, $VO(O(n\text{-}C_8H_{17}))_{0.8}Cl_{2.2}$, $VO(OCH_3)_{1.8}Cl_{1.2}$, $VO(OC_2H_5)_{1.8}Cl_{1.2}$, $VO(O(n\text{-}C_3H_7))_{1.8}Cl_{1.2}$, $VO(O(n\text{-}C_4H_9))_{1.8}Cl_{1.2}$, $VO(O(n\text{-}C_5H_{11}))_{1.8}Cl_{1.2}$, $VO(O(n\text{-}C_6H_{13}))_{1.8}Cl_{1.2}$, $VO(O(n\text{-}C_7H_{15}))_{1.8}Cl_{1.2}$, and $VO(O(n\text{-}C_8H_{17}))_{1.8}Cl_{1.2}$. Among these, $VO(OC_2H_5)Cl_2$, $VO(OC_2H_5)_{0.5}Cl_{2.5}$, $VO(OC_2H_5)_{1.5}Cl_{1.5}$, $VO(OC_2H_5)_{0.8}Cl_{2.2}$, and $VO(OC_2H_5)_{1.8}Cl_{1.2}$ are particularly preferable. These may be used singly or in combination.

The vanadium compound represented by the formula (1) can be obtained, for example, by a method in which $VOX_3$ and ROH are reacted at a predetermined molar ratio. For example, the reaction between $VOCl_3$ and $C_2H_5OH$ is represented by the following formula. $VOX_3$ and ROH may be supplied to a polymerization tank to generate a vanadium compound represented by the formula (1) in the polymerization tank.

$$VOCl_3 + m\cdot C_2H_5OH \rightarrow VO(OC_2H_5)_mCl_{3-m} + m\cdot HCl$$

R'' in the formula (2) may be an alkyl group having from 1 to 10 carbon atoms, and specific examples thereof include a methyl group, an ethyl group, a n-propyl group, an iso-propyl group, a n-butyl group, an iso-butyl group, a pentyl group, and a hexyl group. Examples of X'' include a fluorine atom and a chlorine atom. j is preferably a number satisfying $0 < j \leq 2$.

Specific examples of the organic aluminum compound represented by the formula (2) may include $(C_2H_5)_2AlCl$, $(n\text{-}C_4H_9)_2AlCl$, $(iso\text{-}C_4H_9)_2AlCl$, $(n\text{-}C_6H_{13})_2AlCl$, $(C_2H_5)_{1.5}AlCl_{1.5}$, $(n\text{-}C_4H_9)_{1.5}AlCl_{1.5}$, $(iso\text{-}C_4H_9)_{1.5}AlCl_{1.5}$, (n-

$C_6H_{13})_{1.5}AlCl_{1.5}$, $C_2H_5AlCl_2$, (n-$C_4H_9$)$AlCl_2$, (iso-$C_4H_9$)$AlCl_2$, and (n-$C_6H_{13}$)$AlCl_2$. Among these, $(C_2H_5)_2AlCl$, $(C_2H_5)_{1.5}AlCl_{1.5}$, and $C_2H_5AlCl_2$ are particularly preferable. These may be used singly or in combination.

The molar ratio (moles of organic aluminum compound/moles of vanadium compound) between the used amounts of the organic aluminum compound represented by the formula (2) and the vanadium compound represented by the formula (1) is preferably 0.1 or more and 50 or less, more preferably 1 or more and 30 or less, still more preferably 2 or more and 15 or less, and particularly preferably 3 or more and 10 or less. By adjusting the molar ratio, it is possible to adjust the intrinsic viscosity, Mw/Mn, Mz/Mn, and the like of the copolymer rubber. For example, the intrinsic viscosity of the copolymer rubber tends to increase and Mw/Mn and Mz/Mn tend to decrease when the molar ratio is larger.

The polymerization reaction can be conducted, for example, by a method in which polymerization is conducted by using one polymerization tank or by using two polymerization tanks connected in series. A monomer, a catalyst, and if necessary, other components are supplied to the polymerization tank, and the monomer can be polymerized in the polymerization tank.

The polymerization reaction is usually conducted in a solvent. Examples of the solvent to be used in the polymerization include inert solvents such as aliphatic hydrocarbons such as propane, butane, isobutane, pentane, hexane, heptane, and octane; and alicyclic hydrocarbons such as cyclopentane and cyclohexane. These may be used singly or in combination. Among these, aliphatic hydrocarbons are preferable.

The polymerization temperature may be usually 0°C or higher and 200°C or lower and is preferably 20°C or higher and 150°C or lower, and more preferably 30°C or higher and 120°C or lower. The polymerization pressure may be usually 0.1 MPa or more and 10 MPa or less and is preferably 0.1 MPa or more and 5 MPa or less, more preferably 0.1 MPa or more and 3 MPa or less. It is possible to adjust Mw/Mn and the like of the component (A) by adjusting the polymerization temperature. For example, Mw/Mn tends to decrease when the polymerization temperature is lower.

At the time of polymerization, hydrogen may be supplied to the polymerization tank as a molecular weight regulator if necessary. The amount of hydrogen supplied to the polymerization tank is preferably from 0.001 to 0.1 NL, more preferably from 0.005 to 0.05 NL, and still more preferably from 0.01 to 0.04 NL per 1 kg of the solvent supplied to the polymerization tank. It is possible to adjust Mw/Mn, intrinsic viscosity, and the like of the ethylene-α-olefin-based copolymer by adjusting the supply amount of hydrogen. For example, Mw/Mn tends to decrease when the supply amount of hydrogen is larger. The intrinsic viscosity tends to increase when the supply amount of hydrogen is smaller.

The amount of the vanadium compound supplied to the polymerization tank is preferably 0.002 part by mass or more and 0.2 part by mass or less, more preferably 0.003 part by mass or more and 0.1 part by mass or less per 100 parts by mass of the solvent supplied to the polymerization tank. It is possible to adjust the intrinsic viscosity of the ethylene-α-olefin-based copolymer rubber by adjusting the amount of the vanadium compound with respect to the solvent. For example, there is a tendency that it is possible to increase the intrinsic viscosity by increasing the amount of the vanadium compound.

## Rubber Composition

The rubber composition according to an embodiment contains the ethylene-α-olefin-based copolymer rubber described above. The content of the ethylene-α-olefin-based copolymer rubber in the rubber composition may be 10% by mass or more and 90% by mass or less or 20% by mass or more and 80% by mass or less with respect to the total mass of the rubber composition.

From the viewpoint of improving the heat resistance of the molded body, the rubber composition may further contain an amine-based antioxidant (hereinafter also referred to as a "component (B)") and/or a sulfur-based antioxidant (hereinafter also referred to as a "component (C)". The fact that "heat resistance is favorable" means that the rate of change in tensile strength or elongation is small or a change in hardness is small, after an aging test.

### Amine-based Antioxidant

As the component (B), an amine-based antioxidant that is typically used in rubber compositions can be used. Specific examples of the amine-based antioxidant may include naphthylamine-based antioxidants such as phenyl-α-naphthylamine and phenyl-β-naphthylamine; diphenylamine-based antioxidants such as p-(p-toluenesulfonylamide)diphenylamine, 4,4'-bis(α,α-dimethylbenzyl)diphenylamine, alkylated diphenylamine (for example, octylated diphenylamine), dioctylated diphenylamine (for example, 4,4'-dioctyldiphenylamine), a high temperature reaction product of diphenylamine and acetone, a low temperature reaction product of diphenylamine and acetone, a low temperature reaction product of diphenylamine and aniline and acetone, and a reaction product of diphenylamine and diisobutylene; and p-phenylenediamine-based antioxidants such as N,N'-diphenyl-p-phenylenediamine, N-isopropyl-N'-phenyl-p-phenylenediamine, N,N'-di-2-naphthyl-p-phenylenediamine, N-cyclohexyl-N'-phenyl-p-phenylenediamine, N-phenyl-N'-(3-methacryloyloxy-2-hydroxypropyl)-p-phenylenediamin e, N,N'-bis(1-methylheptyl)-p-phenylenediamine, N,N-bis(1,4-dimethylpentyl)-p-phenylenediamine, N,N'-bis(1-ethyl-3-methylpentyl)-p-phenylenediamine, N-(1,3-dimethylbutyl)-N'-phenyl-p-phenylenediamine, N-hexyl-N'-phenyl-p-phenylenediamine, and N-octyl-N'-phenyl-p-phenylenediamine. These may be used singly or in combination.

Among these, diphenylamine-based antioxidants are preferable, and 4,4'-bis(α,α-dimethylbenzyl)diphenylamine, N,N'-diphenyl-p-phenylenediamine, and N,N'-di-2-naphthyl-p-phenylenediamine are more preferable.

The content of the amine-based antioxidant in the rubber composition is preferably 0.1 part by mass or more and 20 parts by mass or less when the content of the ethylene-α-olefin type copolymer rubber is taken as 100 parts by mass, and it is possible to improve the heat resistance of the molded body when the content of the amine-based antioxidant is 0.1 part by mass or more. There is a tendency that the molded body can maintain more favorable cold resistance when the content of the amine-based antioxidant is 20 parts by mass or less. From the same viewpoint, the content of the amine-based antioxidant is more preferably 1 part by mass or more and 15 parts by mass or less and still more preferably 2 parts by mass or more and 13 parts by mass or less.

Sulfur-based Antioxidant

As the component (C), a sulfur-based antioxidant that is typically used in rubber compositions can be used. Specific examples of the sulfur-based antioxidant include imidazole-based antioxidants such as 2-mercaptobenzimidazole, a zinc salt of 2-mercaptobenzimidazole, 2-mercaptomethylbenzimidazole, a zinc salt of 2-mercaptomethylbenzimidazole, and a zinc salt of 2-mercaptomethylimidazole; and aliphatic thioether-based antioxidants such as dimyristyl thiodipropionate, dilauryl thiodipropionate, distearyl thiodipropionate, ditridecyl thiodipropionate, and pentaerythritol-tetrakis(β-lauryl-thiopropionate). These may be used singly or in combination.

Among these, imidazole-based antioxidants are preferable, and 2-mercaptobenzimidazole, a zinc salt of 2-mercaptobenzimidazole, 2-mercaptomethylbenzimidazole, a zinc salt of 2-mercaptomethylbenzimidazole, or any combination thereof is particularly preferable.

The content of the sulfur-based antioxidant in the rubber composition is preferably 0.1 part by mass or more and 20 parts by mass or less when the content of the ethylene-α-olefin type copolymer is taken as 100 parts by mass. The heat resistance of the molded body tends to be improved when the content of the sulfur-based antioxidant is 0.1 part by mass or more. There is a tendency that the molded body can maintain more favorable cold resistance when the content of the sulfur-based antioxidant is 20 parts by mass or less. The content of the sulfur-based antioxidant is more preferably 1 part by mass or more and 15 parts by mass or less and still more preferably 2 parts by mass or more and 13 parts by mass or less.

From the viewpoint of being able to further prevent a decrease in the cold resistance as well as to further improve the heat resistance of the molded body, it is preferable that the rubber composition contains both an amine-based antioxidant and a sulfur-based antioxidant. In this case, the mass ratio (content of amine-based antioxidant/content of sulfur-based antioxidant) of the content of the amine-based antioxidant to the content of the sulfur-based antioxidant is preferably 0.1 or more and 10 or less and more preferably 0.2 or more and 5 or less.

The rubber composition may further contain an antioxidant other than the components (B) and (C) described above. Examples of the antioxidant other than the component (B) and the component (C) include styrenated phenol, 2,6-di-t-butylphenol, 2,6-di-t-butyl-4-methylphenol, 2,6-di-t-butyl-4-ethylphenol, 2,4,6-tri-t-butylphenol, butylhydroxyanisole, 1-hydroxy-3-methyl-4-isopropylbenzene, mono-t-butyl-p-cresol, mono-t-butyl-m-cresol, 2,4-dimethyl-6-t-butylphenol, butylated bisphenol A, 2,2'-methylene-bis(4-methyl-6-t-butylphenol), 2,2'-methylene-bis(4-ethyl-6-t-butylphenol), 2,2'-methylene-bis(4-methyl-6-t-nonylphenol), 2,2'-isobutylidene-bis(4,6-dimethylphenol), 4,4'-butylidene-bis(3-methyl-6-t-butylphenol), 4,4'-methylene-bis(2,6-di-t-butylphenol), 2,2'-thio-bis(4-methyl-6-t-butylphenol), 4,4'-thio-bis(3-methyl-6-t-butylphenol), 4,4'-thio-bis(2-methyl-6-butylphenol), 4,4'-thio-bis(6-t-butyl-3-methylphenol), bis(3-methyl-4-hydroxy-5-t-butylbenzene) sulfide, 2,2'-thio[diethyl-bis-3-(3,5-di-t-butyl-4-hydroxyphenol) propionate], bis[3,3-bis(4-hydroxy-3-t-butylphenol)butyric acid] glycol ester, bis[2-(2-hydroxy-5-methyl-3-t-butylbenzene)-4-methyl-6-t-butylpheny] terephthalate, 1,3,5-tris(3,5-di-t-butyl-4-hydroxybenzyl) isocyanurate, N,N'-hexamethylene-bis(3,5-di-t-butyl-4-hydroxy-hydrocinnamamide), n-octadecyl-3-(4-hydroxy-3,5-di-t-butylphenol) propionate, tetrakis[methylene-3-(3,5-di-t-butyl-4-hydroxyphenyl) propionate] methane, 1,1'-bis(4-hydroxyphenyl)cyclohexane, mono(α-methylbenzene) phenol, di(α-methylbenzyl)phenol, tri(α-methylbenzyl)phenol, 2,6-bis(2-hydroxy-3-t-butyl-5-methylbenzyl)-4-methylphenol, 3,9-bis[2-{3-(3-t-butyl-4-hydroxy-5-methylphenyl)propionyloxy}-1,1-d imethylethyl]-2,4,8,10-tetraoxaspiro[5.5]undecane, 2,5-di-t-amylhydroquinone, 2,6-di-t-butyl-a-dimethylamino-p-cresol, 2,5-di-t-butylhydroquinone, diethyl ester of 3,5-di-t-butyl-4-hydroxybenzylphosphoric acid, catechol, hydroquinone, and a 2,2,4-trimethyl-1,2-dihydroquinoline polymer. It is possible to use these singly or in combination.

The content of the antioxidant other than the components (B) and component (C) described above in the rubber composition is preferably 0.1 part by mass or more and 15 parts by mass or less and more preferably 0.5 part by mass or more and 10 parts by mass or less when the content of the ethylene-α-olefin-based copolymer rubber is taken as 100 parts by mass.

Other Additives

The rubber composition of the present embodiment may contain additives such as a reinforcing agent, a softening agent, a vulcanizing agent, a vulcanization accelerator, a vulcanization aid, a processing aid, a silane coupling agent, or a rubber component other than the component (A) in addition to the components described above.

A reinforcing agent refers to an additive which improves the mechanical properties of a vulcanizate of rubber by being blended in the rubber as described in Handbook of Rubber/Plastics Combined Chemicals (published by Rubber Digest Co., Ltd. on April 20, 1981). The reinforcing agent may include carbon black, dry process silica, wet process silica, synthetic silicate-based silica, colloidal silica, basic magnesium carbonate, activated calcium carbonate, heavy calcium carbonate, light calcium carbonate, mica, magnesium silicate, aluminum silicate, lignin, aluminum hydroxide, and magnesium hydroxide. These may be used singly or in combination.

The content of the reinforcing agent in the rubber composition is preferably 20 parts by mass or more and 250 parts by mass or less, more preferably 30 parts by mass or less and 200 parts by mass or more, and still more preferably 40 parts by mass or more and 180 parts by mass or less when the content of the ethylene-$\alpha$-olefin-based copolymer rubber is taken as 100 parts by mass.

The softening agent may include process oil, lubricating oil, paraffin-based oils such as paraffin and liquid paraffin, naphthene-based oils, petroleum asphalt, Vaseline, coal tar pitch, castor oil, linseed oil, factice, dense wax, and ricinoleic acid. These may be used singly or in combination.

The content of the softening agent in the case of containing a softening agent in the rubber composition is preferably 5 parts by mass or more and 250 parts by mass or less, more preferably 5 parts by mass or more and 150 parts by mass or less, and still more preferably 5 parts by mass or more and 80 parts by mass or less when the content of the ethylene-$\alpha$-olefin-based copolymer rubber is taken as 100 parts by mass.

The vulcanizing agent may include sulfur, a sulfur compound, and an organic peroxide. The vulcanizing agent preferably contains an organic peroxide. These may be used singly or in combination. Sulfur may be powder sulfur, precipitated sulfur, colloidal sulfur, surface-treated sulfur, insoluble sulfur, or the like. The content of the sulfur and sulfur-based compound in the rubber composition is preferably from 0.01 to 10 parts by mass and more preferably from 0.1 to 5 parts by mass when the content of the ethylene-$\alpha$-olefin-based copolymer rubber is taken as 100 parts by mass.

The organic peroxide may include dicumyl peroxide, 2,5-dimethyl-2,5-di-(t-butylperoxy)hexane, 2,5-dimethyl-2,5-di-(benzoylperoxy)hexane, 2,5-dimethyl-2,5-di-(t-butylperoxy)hexyne-3, di-t-butyl peroxide, di-t-butyl peroxide-3,3,5-trimethylcyclohexane, and t-butyl hydroperoxide. The organic peroxide is preferably dicumyl peroxide, di-t-butyl peroxide, and di-t-butyl peroxide-3,3,5-trimethylcyclohexane, and more preferably dicumyl peroxide. The blended amount of the organic peroxide is preferably from 0.1 to 15 parts by mass and more preferably from 1 to 8 parts by mass when the content of the ethylene-$\alpha$-olefin-based copolymer rubber is taken as 100 parts by mass.

The vulcanization accelerator may include tetramethylthiuram monosulfide, tetramethylthiuram disulfide, tetraethylthiuram disulfide, tetrabutylthiuram disulfide, dipentamethylenethiuram monosulfide, dipentamethylenethiuram disulfide, dipentamethylenethiuram tetrasulfide, N,N'-dimethyl-N,N'-diphenylthiuram disulfide, N,N'-dioctadecyl-N,N'-diisopropylthiuram disulfide, N-cyclohexyl-2-benzothiazole-sulfenamide, N-oxydiethylene-2-benzothiazole-sulfenamide, N,N-diisopropyl-2-benzothiazole-sulfenamide, 2-mercaptobenzothiazole, 2-(2,4-dinitrophenyl)mercaptobenzothiazole, 2-(2,6-diethyl-4-morpholinothio)benzothiazole, dibenzothiazyl disulfide, diphenylguanidine, triphenylguanidine, diorthotolylguanidine, orthotolylbiguanide, diphenylguanidine-phthalate, n-butyraldehyde-aniline, hexamethylenetetramine, acetaldehyde ammonia, 2-mercaptoimidazoline, thiocarbanilide, diethylthiourea, dibutylthiourea, trimethylthiourea, diorthotolylthiourea, zinc dimethyldithiocarbamate, zinc diethylthiocarbamate, zinc di-n-butyldithiocarbamate, zinc ethylphenyldithiocarbamate, zinc butylphenyldithiocarbamate, sodium dimethyldithiocarbamate, selenium dimethyldithiocarbamate, tellurium diethyldithiocarbamate, zinc dibutyl xanthate, and ethylene thiourea. These may be used singly or in combination.

The content of the vulcanization accelerator in the rubber composition is preferably 0.05 part by mass or more and 20 parts by mass or less and more preferably 0.1 part by mass or more and 8 parts by mass or less when the content of the ethylene-$\alpha$-olefin-based copolymer rubber is taken as 100 parts by mass.

The vulcanization aid may include triallyl isocyanurate, N,N'-m-phenylene bismaleimide, methacrylic acid, methyl methacrylate, ethyl methacrylate, propyl methacrylate, isopropyl methacrylate, n-butyl methacrylate, i-butyl methacrylate, sec-butyl methacrylate, t-butyl methacrylate, 2-ethylhexyl methacrylate, cyclohexyl methacrylate, isodecyl methacrylate, lauryl methacrylate, tridecyl methacrylate, stearyl methacrylate, 2-hydroxyethyl methacrylate, hydroxypropyl methacrylate, polyethylene glycol monomethacrylate, polypropylene glycol monomethacrylate, 2-ethoxyethyl methacrylate, tetrahydrofurfuryl methacrylate, allyl methacrylate, glycidyl methacrylate, benzyl methacrylate, dimethylaminoethyl methacrylate, diethylaminoethyl methacrylate, methacryloxyethyl phosphate, 1,4-butanediol diacrylate, ethylene glycol dimethacrylate, 1,3-butylene glycol dimethacrylate, neopentyl glycol dimethacrylate, 1,6-hexanediol dimethacrylate, diethylene glycol dimethacrylate, triethylene glycol dimethacrylate, polyethylene glycol dimethacrylate, dipropylene glycol dimethacrylate, polypropylene glycol dimethacrylate, trimethylolethane trimethacrylate, trimethylolpropane trimethacrylate, allyl glycidyl ether, N-methylol methacrylamide, 2,2-bis(4-methacryloxypolyethoxyphenyl)propane, aluminum methacrylate, zinc methacrylate, calcium methacrylate, magnesium methacrylate, 3-chloro-2-hydroxypropyl methacrylate, zinc oxide, and magnesium oxide. These may be used singly or in combination.

The content of the vulcanization aid in the rubber composition is preferably 0.05 part by mass or more and 15 parts by mass or less and more preferably 0.1 part by mass or more and 8 parts by mass or less when the content of the ethylene-α-olefin-based copolymer rubber is taken as 100 parts by mass.

Examples of the processing aid include fatty acids such as oleic acid, palmitic acid, and stearic acid; fatty acid metal salts such as zinc laurate, zinc stearate, barium stearate, and calcium stearate; fatty acid esters; glycols such as ethylene glycol and polyethylene glycol. It is possible to use these singly or in combination. The content of the processing aid in the rubber composition is preferably 0.2 part by mass or more and 10 parts by mass or less and more preferably 0.3 part by mass or more and 8 parts by mass or less when the content of the ethylene-α-olefin-based copolymer rubber is taken as 100 parts by mass.

The silane coupling agent may include a silane-based silane coupling agent, a vinyl-based silane coupling agent, a methacrylic silane coupling agent, an epoxy-based silane coupling agent, a mercapto-based silane coupling agent, a sulfur-based silane coupling agent, an amino-based silane coupling agent, a ureido-based silane coupling agent, and an isocyanate-based silane coupling agent. These may be used singly or in combination.

The content of the silane coupling agent in the rubber composition is preferably 0.1 part by mass or more and 10 parts by mass or less and more preferably 0.5 part by mass or more and 8 parts by mass or less when the content of the ethylene-α-olefin-based copolymer rubber is taken as 100 parts by mass.

The rubber component which can be contained in the rubber composition and is a rubber component other than the component (A) may include natural rubber, isoprene rubber, butadiene rubber, styrene-butadiene rubber, and butyl rubber. The content of the rubber component other than the component (A) in the rubber composition is preferably 10 parts by mass or more and 40 parts by mass or less and more preferably 15 parts by mass or more and 30 parts by mass or less when the content of the ethylene-α-olefin-based copolymer rubber is taken as 100 parts by mass.

Molded Body

The method for producing a molded body from a rubber composition according to the present embodiment can include molding a rubber composition to form a molded body and vulcanizing a rubber composition. The rubber composition may be vulcanized while forming a molded body, or the rubber composition forming the molded body may be vulcanized after the molded body is formed.

The rubber composition can be obtained, for example, by kneading a mixture containing the ethylene-α-olefin-based copolymer rubber and other components to be added if necessary. Kneading can be conducted by using a sealed type kneader such as a mixer, a kneader, and a twin screw extruder. It is preferable to conduct kneading until the respective components are uniformly mixed. The kneading time is preferably 1 minute or longer and 60 minutes or shorter. The kneading temperature is preferably 40°C or higher and 200°C or lower.

It is possible to obtain a vulcanized molded body by molding the vulcanizable rubber composition obtained in the kneading step while heating the rubber composition at 120°C or higher and 250°C or lower and preferably 140°C or higher and 220°C or lower for 1 minute or longer and 60 minutes or shorter by using a molding machine such as an injection molding machine, a compression molding machine, or a hot air vulcanizing device.

It is possible to produce various kinds of products such as an engine mount, a muffler hanger, a strut mount, a torsional damper, a change lever mount, a clutch torsion rubber, a centering bush, a tube damper, a torque bush, a suspension bush, a body mount, a cab mount, a member mount, a strut bar/cushion, a tension rod/bush, an arm bush, a lower ring bush, a radiator support, a damper pulley, a rack mount, an emission control hose, a fuel hose, an air conditioning hose, a power steering hose, a brake hose, a clutch hose, a master pack hose, boots for constant velocity joint (CVJ), rack and pinion boots, a timing belt, a wiper blade, and washing machine hose for dry cleaning by a usual method using the molded body obtained by such a method.

## Examples

Hereinafter, the present invention will be described more specifically based on Examples, but the present invention is not limited thereto.

Measurement/Evaluation Methods

(1) Content of Ethylene Unit and Content of Propylene Unit

The copolymer rubber was molded into a film having a thickness of about 0.1 mm by a hot press machine and

the infrared absorption spectrum of the film was measured with an infrared spectrophotometer (IR-810 manufactured by JASCO Corporation). The content of the ethylene unit and the content of the propylene unit were determined from the infrared absorption spectrum according to the method described in the literature (Characterization of Polyethylene by Infrared Absorption Spectrum written by Takayama, Usami et al. or Die Makromolekulare Chemie, 177, 461 (1976) written by Mc Rae, M.A., Maddam S, W. F. et al.).

(2) Iodine Value

Three kinds of ethylene-propylene-5-ethylidene-2-norbornene copolymer rubbers having different iodine values were each molded into a film having a thickness of about 0.2 mm by a hot press machine in conformity to "JIS K 0070-1992 6. Iodine Value". A peak (absorption peak at 1686 $cm^{-1}$) derived from 5-ethylidene-2-norbornene of each film and a base peak (absorption peak at from 1664 to 1674 $cm^{-1}$) were measured with an infrared spectrophotometer (IR-700 manufactured by JASCO Corporation), and the IR index was calculated by the following Equation (I). A is the transmittance of the base peak, B is the transmittance of the peak derived from 5-ethylidene-2-norbornene, and D (mm) is the thickness of the film.

$$\text{IR index} = \text{Log}\,(A/B)/D \cdots \text{Equation (I)}$$

A calibration curve of iodine value represented by the following Equation (II) was obtained from the IR index and the known iodine value.

$$\text{Iodine value} = \alpha \times \text{IR index} + \beta \cdots \text{Equation (II)}$$

$\alpha$ and $\beta$ in Equation (II) are a constant, respectively.

(3) Product of Monomer Reactivity Ratios

$^{13}$C-NMR was measured under the following conditions, and the product of monomer reactivity ratios was determined by the method described in Kakugo et al., Macromolecules 15 1150-1152 (1982).

- Instrument: Avance 600 (10 mm cryoprobe) manufactured by Bruker
- Measurement solvent: 1,2-dichlorobenzene/1,2-dichlorobenzene-d4 (80/20 by volume ratio)
- Measurement temperature: 130°C
- Measurement method: Powergate proton decoupling method
- Pulse width: 45 degrees
- Pulse repetition time: 4 seconds
- Integration count: 1,000 times
- Chemical shift value standard: tetramethylsilane

Hereinafter, a method for determining the product of monomer reactivity ratios in the ethylene-propylene copolymer rubber synthesized in Example 1 will be described as an example. The carbon atoms of methylene in the copolymer are classified as $\alpha\alpha$, $\alpha\delta$, $\beta\delta$, $\delta\delta$, and $\gamma\delta$ by Greek letters chosen based on the distance from the nearest tertiary carbon atom on both sides. $\alpha$, $\beta$, and $\gamma$ represent the positions of the first, second, and third atoms from the nearest tertiary carbon atom in the molecular chain, respectively. $\delta$ represents the position of the fourth or subsequent atom from the nearest tertiary carbon atom in the molecular chain. The following figure shows an example of the classification of carbon atoms of methylene by these codes. In this figure, the partial structure of the copolymer is illustrated in a form in which the hydrogen atoms are omitted.

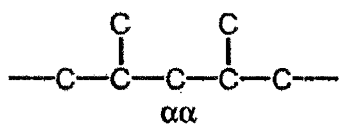

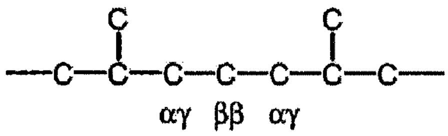

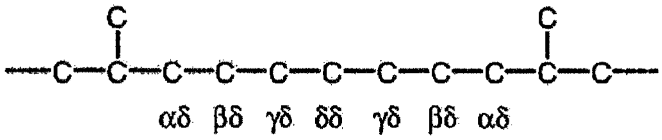

The respective kinds of peaks derived from the carbon atoms of methylene by $^{13}$C-NMR were identified as illustrated in FIG. 1. The peak area Sαα of the αα carbon atom, the peak area Say of the carbon atom of αγ, the peak area Sαδ of the carbon atom of αδ, the peak area Sβδ of the carbon atom of the βδ, and the peak area Sδδ of the carbon atom δδ were determined from the $^{13}$C-NMR spectrum. The respective peak areas determined from the spectrum of FIG. 1 were as follows.

Sαα: 35.0
Sαγ: 90.8
Sαδ: 145.5
Sβδ: 126.9
Sδδ: 106.6
Sγδ: 76.5

A peak area PP derived from a moiety in which the monomer units were bonded in the order of propylene unit-propylene unit, a peak area PE derived from a moiety in which the monomer units were bonded in the order of propylene unit-ethylene unit, and the peak area EE derived from a moiety in which the monomer units were bonded in the order of ethylene unit-ethylene unit were determined by the following Equations.

$$PP = S\alpha\alpha$$

$$PE = S\alpha\gamma + S\alpha\delta$$

$$EE = 1/2\ (S\beta\delta + S\delta\delta) + 1/4\ S\gamma\delta$$

The product (the product of the ethylene reactivity ratio r1 and the propylene reactivity ratio r2) rlr2 of the monomer reactivity ratios of the ethylene-propylene copolymer rubber was calculated by the following Equation (III).

$$r1r2 = EE\ \{PP/(PE/2)^2\} \cdots \text{Equation (III)}$$

In a case in which the copolymer rubber contains an α-olefin unit other than the propylene unit and a case in which the copolymer contains two or more kinds of α-olefin units as well, it is possible to determine Sαα, Sαγ, Sαδ, Sβδ, Sδδ, and Sγδ from the $^{13}$C-NMR spectrum and determine the product of reactivity ratios using these in the same manner. For example, in a case in which a plurality of peaks of the carbon atoms at the position of αα are observed to reflect the difference in the kinds of α-olefin units, it is possible to calculate the product of monomer reactivity ratios by taking the total area of these as Sαα.

(4) Intrinsic Viscosity (unit: dl/g)

The reduced viscosity (viscosity number) of a copolymer solution of which the concentration was known was measured in tetralin at 135°C with a Ubbelohde viscometer. The intrinsic viscosity of the copolymer rubber was determined from the measurement results according to the calculation method described in "Polymer Solutions and Polymer Experiments 11" (1982, published by Kyoritsu Shuppan Co., Ltd.) page 491.

(5) Molecular Weight Distribution

The values of weight average molecular weight (Mw) and number average molecular weight (Mn) in terms of standard polystyrene were measured by gel permeation chromatography (GPC) under the following conditions.

- GPC apparatus: trade name HLC-8121 GPC/HT manufactured by Tosoh Corporation
- Column: TSKgel GMHHR-H(S)HT manufactured by Tosoh Corporation
- Molecular weight standard substance: polystyrene having molecular weight of 500 or more and 20,000,000 or less
- Flow velocity of eluting solvent: 1.0 mL/min
- Sample concentration: 1 mg/mL
- Measurement temperature: 140°C
- Eluting solvent: orthodichlorobenzene
- Injection volume: 500 μL
- Detector: differential refractometer

(6) Compression Set

A cylindrical small specimen (diameter: 29.0 mm and thickness: 12.5 mm) prescribed in JIS K6262-1997 was compressed to a strain of 25% at room temperature with a compression device. In this state, compression of the small specimen was continuously conducted for 22 hours in a gear oven set at a temperature of -30°C as an ambient temperature. After 22 hours elapsed, compression of the small specimen was released at an ambient temperature of -30°C, the small specimen was left to stand at that temperature for 30 minutes, the thickness of the central part of the specimen was then measured, and the remaining strain (%) was determined. The proportion of this strain with respect to the initial strain, 25% was determined as the residual strain rate (%) of the specimen. It means that the cold resistance is superior as this residual strain rate is lower.

(7) TGIC Analysis

The ethylene-α-olefin-based copolymer rubber was analyzed by TGIC. The TGIC analysis was conducted by cross-fractionation chromatography (CFC) equipped with a TREF column. The specific analysis procedure and analysis conditions are presented below.

Analysis Procedure

(a) A sample solution was prepared by dissolving the ethylene-α-olefin-based copolymer rubber in orthodichlorobenzene.
(b) The sample solution was injected into the TREF column (temperature: 165°C) of the CFC apparatus and held for 20 minutes.
(c) The temperature of the TREF column was decreased to -15°C at a rate of 20°C/min and held at -15°C for 30 minutes and the elution amount (% by mass) at -15°C was measured by with an infrared spectrophotometer.
(d) The temperature of the TREF column was stepwisely increased from -15°C to 160°C at a rate of 40°C/min and held at each elution temperature for a predetermined time (about 19 minutes) and the elution amount (% by mass) at each elution temperature was measured with an infrared spectrophotometer. The elution temperature was set to be 37 stages to be presented below.

Analysis Conditions

Apparatus: Automated 3D Analyzer CFC-2 manufactured by Polymer Characterization, S.A
TREF column: Hypercarb Column for High Temperature (50 × 10 mm, 35005-059046) manufactured by Thermo Fisher Scientific Inc.
GPC column: three pieces of GMHHR-H(S) manufactured by Tosoh Corporation
Detector: Infrared Spectrophotometer IR5 manufactured by Polymer Characterization, S.A.

Eluent: orthodichlorobenzene (for high performance liquid chromatography)
Sample concentration: 20 mg/20 mL
Injection volume: 0.5 mL
Flow rate: 1.0 mL/min.
Elution temperature: -15, -10, -5, 0, 4, 8, 12, 16, 20, 24, 28, 32, 36, 40, 43, 46, 49, 52, 55, 58, 61, 64, 67, 70, 73, 76, 79, 82, 85, 90, 95, 100, 110, 120, 140, 150, and 160°C.

(i) Peak Height and Peak Top Temperature

The elution amount of the ethylene-α-olefin-based copolymer rubber in the range of from -15°C to 160°C was measured by TGIC, the integral elution amount W was calculated by integrating the elution amounts from -15°C to the respective elution temperatures T, and a W-T curve representing the relationship between the integral elution amount W and the elution temperature T was created. dW/dT was calculated by differentiating the integral elution amount W with respect to the elution temperature T on the W-T curve, and a dW/dT-T curve (the ordinate: dW/dT and the abscissa: elution temperature) representing the relationship between dW/dT and the elution temperature T was created. The peak top temperature of the maximum peak on the dW/dT-T curve thus obtained and the maximum value (peak height) of dW/dT at the peak top temperature were determined. The peak top temperature is the elution temperature when dW/dT has the maximum value. FIG. 2 is a graph illustrating the dW/dT-T curve of the copolymer rubber-A.

(ii) Proportion of Integral Elution Amount at 40°C to Total Elution Amount

An elution temperature-elution amount curve (the ordinate: elution amount and the abscissa: elution temperature) representing the relationship between the elution amount and the elution temperature was created based on the elution amount measured in the range of from -15°C to 160°C. The proportion of the integral elution amount from -15°C to 40°C with respect to the total elution amount when the total elution amount was taken as 100% was calculated. The proportion of elution amount in a temperature region higher than 40°C was determined by subtracting the proportion thus obtained from 100%. The total elution amount means the integral value from -15°C to 160°C on the elution temperature-elution amount curve.

(iii) T(80) - T(20)

The elution temperature (T(80)°C) at which the proportion of the integral elution amount with respect to the total elution amount reached 80% and the elution temperature (T(20)°C) at which the proportion of the integral elution amount with respect to the total elution amount reached 20% when the total elution amount was taken as 100% were determined, and the difference (T(80) - T(20)) between these temperatures was determined.

(8) Heat Resistance

The rubber composition was compression-molded at a set temperature of 170°C for 20 minutes with a 100 ton press (trade name: PSF-B010 manufactured by KANSAI ROLL Co., Ltd.), and molding and vulcanization were conducted at the same time, thereby fabricating a molded body having a thickness of 2 mm. The heat resistance was evaluated by a normal oven method having the following procedure in conformity to JIS K6257.

(a) A dumbbell-shaped No. 3 specimen described in JIS K6251 was fabricated from the fabricated molded body.
(b) The fabricated specimen was subjected to a heat treatment at 180°C for 360 hours.
(c) The breaking elongations of the specimen before the heat treatment and the specimen after the heat treatment were measured under the conditions of an ambient temperature of 23°C and a tension speed of 500 mm/min with QUICK READER P-57 (trade name) manufactured by UESHIMA SEISAKUSHO CO., LTD., and the rate of change in breaking elongation by the heat treatment was calculated according to the following Equation.

$$\text{Rate of change in breaking elongation (\%)} = \text{Breaking elongation of specimen after heat treatment (\%)} / \text{Breaking elongation of specimen before heat treatment (\%)} \times 100 - 100$$

The heat resistance is more favorable as this rate of change is closer to 0.

Example 1

Production of Copolymer Rubber

Hexane, ethylene, and propylene were supplied to a first polymerization tank which was made of stainless steel and equipped with a stirrer at a rate of 637.6 g/(hr·L), 20.5 g/(hr·L), and 174.9 g/(hr·L) per unit time and unit volume of polymerization tank, respectively. $VOCl_3$ and ethanol were supplied to the polymerization tank at a rate of 25.9 mg/(hr·L) and 12.4 mg/(hr·L), respectively, while mixing and stirring these with a line mixer. Ethylaluminum sesquichloride (EASC) and hydrogen were supplied to the polymerization tank at a rate of 155.3 mg/(hr·L) and 0.018 NL/(hr·L), respectively. The temperature of the polymerization tank was kept at 38°C. An ethylene-propylene copolymer rubber (hereinafter also referred to as a "copolymer rubber-A") was generated in this polymerization tank at 26 g/(hr·L) per unit time and unit volume of polymerization tank.

The content of the ethylene unit was 44% by mass and the content of the propylene unit was 56% by mass when the sum of the content of the ethylene unit and the content of the propylene unit in the copolymer rubber-A was taken as 100% by mass. The product of the monomer reactivity ratios of the copolymer rubber was 0.34.

Preparation of Rubber Composition

With a 1700 mL Banbury mixer (manufactured by Kobe Steel, Ltd.) adjusted to a start temperature of 70°C, 100 parts by mass of the copolymer rubber-A, 2 parts by mass of 4,4'-bis($\alpha$,$\alpha$-dimethylbenzyl)diphenylamine (trade name "NOCRAC CD" manufactured by OUCHI SHINKO CHEMICAL INDUSTRIAL CO., LTD.) as the component (B), 8 parts by mass of 2-mercaptobenzimidazole (trade name "ANTAGE MB" manufactured by KAWAGUCHI CHEMICAL INDUSTRY CO., LTD.) as the component (C), and the following additives as other additives were kneaded at a number of revolutions of the rotor of 60 rpm for 5 minutes.

Other Additives

- Carbon black (trade name "Asahi #50G" manufactured by ASAHI CARBON CO., LTD.): 40 parts by mass
- Zinc oxide (trade name "Zinc Oxide II" manufactured by SEIDO CHEMICAL INDUSTRY CO., LTD.): 5 parts by mass
- Stearic acid (trade name "Stearic Acid 50S" manufactured by New Japan Chemical Co., Ltd.): 1 part by mass

Thereafter, 6.75 parts by mass of dicumyl peroxide ("PERCUMYL D-40" manufactured by NOF CORPORATION) as a vulcanizing agent and 2 parts by mass of ethylene glycol dimethacrylate ("Acryester ED" manufactured by Mitsubishi Chemical Corporation) as a vulcanization aid were added to and kneaded with the kneaded product with an 8-inch open roll (manufactured by KANSAI ROLL Co., Ltd.), thereby obtaining a rubber composition.

Production of Molded Body

The resulting rubber composition was compression-molded at a set temperature of 170°C for 20 minutes with a 100 ton press (trade name: PSF-B010 manufactured by KANSAI ROLL Co., Ltd.), and molding and vulcanization were conducted at the same time, thereby fabricating a molded body as a small specimen prescribed in JIS K6262-1997. The evaluation results for the specimen are presented in the following Table 2 together with the blended proportion of the rubber composition.

The heat resistance of the resultinhg molded body of the rubber composition was evaluated by the method described above, and as a result, the rate of change in breaking elongation of the molded body by a heat treatment was -31%.

Example 2

In the preparation of the rubber composition, 100 parts by mass of the copolymer rubber-A, 2 parts by mass of 4,4'-bis($\alpha$,$\alpha$-dimethylbenzyl)diphenylamine (trade name "NOCRAC CD" manufactured by OUCHI SHINKO CHEMICAL INDUSTRIAL CO., LTD.) as the component (B), 8 parts by mass of 2-mercaptobenzimidazole (trade name "ANTAGE MB" manufactured by KAWAGUCHI CHEMICAL INDUSTRY CO., LTD.) as the component (C), and 95 parts by mass of carbon black (trade name "Asahi #50G" manufactured by ASAHI CARBON CO., LTD.), 40 parts by mass of process oil (trade name "Diana Process Oil PW-380" manufactured by Idemitsu Kosan Co., Ltd.), 5 parts by mass of zinc oxide (trade name "Zinc Oxide II" manufactured by SEIDO CHEMICAL INDUSTRY CO., LTD.), and 1 part by mass of stearic

acid (trade name "Stearic Acid 50S" manufactured by New Japan Chemical Co., Ltd.) as other additives were used. A small specimen of a molded body was fabricated in the same manner as in Example 1 except this.

The heat resistance of the resulting molded body of the rubber composition was evaluated by the method described above, and as a result, the rate of change in breaking elongation of the molded body by a heat treatment was -32%.

Example 3

Production of Copolymer Rubber

Hexane, ethylene, and propylene were supplied to a first polymerization tank which was made of stainless steel and equipped with a stirrer at a rate of 625.0 g/(hr·L), 18.7 g/(hr·L), and 189.4 g/(hr·L) per unit time and unit volume of polymerization tank, respectively. $VOCl_3$ and ethanol were supplied to the polymerization tank at a rate of 36.8 mg/(hr·L) and 17.7 mg/(hr·L), respectively, while mixing and stirring these with a line mixer. Ethylaluminum sesquichloride (EASC) was supplied to the polymerization tank at a rate of 221.0 mg/(hr·L). The temperature of the polymerization tank was kept at 38°C. An ethylene-propylene copolymer rubber (hereinafter also referred to as a "copolymer rubber-B") was generated in this polymerization tank at 28 g/(hr·L) per unit time and unit volume of polymerization tank.

The content of the ethylene unit was 36% by mass and the content of the propylene unit was 64% by mass when the sum of the content of the ethylene unit and the content of the propylene unit in the copolymer rubber-B thus obtained was taken as 100% by mass. The product of the monomer reactivity ratios of the copolymer rubber-B was 0.34.

Preparation of Rubber Composition and Production of Molded Body

A small specimen of a molded body was fabricated in the same manner as in (Preparation of Rubber Composition) and (Production of Molded Body) of Example 1 except that the copolymer rubber-B was used instead of the copolymer rubber-A.

The heat resistance of the resulting molded body of the rubber composition was evaluated by the method described above, and as a result, the rate of change in breaking elongation of the molded body by a heat treatment was -24%.

Example 4

Production of Copolymer Rubber

Hexane, ethylene, and propylene were supplied to a first polymerization tank which was made of stainless steel and equipped with a stirrer at a rate of 418.9 g/(hr·L), 30.5 g/(hr·L), and 275.6 g/(hr·L) per unit time and unit volume of polymerization tank, respectively. $VOCl_3$ and ethanol were supplied to the polymerization tank at a rate of 41.1 mg/(hr·L) and 19.7 mg/(hr·L), respectively, after being mixed and stirred with a line mixer. Ethylaluminum sesquichloride (EASC) and hydrogen were supplied to the polymerization tank at a rate of 234.5 mg/(hr·L) and 0.006 NL/(hr·L). Furthermore, 5-ethylidene-2-norbornene was supplied to the polymerization tank at a rate of 3.1 g/(hr·L). The temperature of the polymerization tank was kept at 40°C. An ethylene-propylene-5-ethylidene-2-norbornene copolymer rubber (hereinafter also referred to as a "copolymer rubber-C") was generated in this polymerization tank at 35 g/(hr·L) per unit time and unit volume of polymerization tank.

The content of the ethylene unit was 47% by mass and the content of the propylene unit was 53% by mass when the sum of the content of the ethylene unit and the content of the propylene unit in the copolymer rubber-C thus obtained was taken as 100% by mass. The product of the monomer reactivity ratios of the copolymer rubber-C was 0.36.

Preparation of Rubber Composition and Production of Molded Body

A small specimen of a molded body was fabricated in the same manner as in (Preparation of Rubber Composition) and (Production of Molded Body) of Example 2 except that the copolymer rubber-C was used instead of the copolymer rubber-A.

Example 5

Production of Copolymer Rubber

Hexane, ethylene, and propylene were supplied to a first polymerization tank which was made of stainless steel and equipped with a stirrer at a rate of 352.3 g/(hr·L), 27.2 g/(hr·L), and 218.0 g/(hr·L) per unit time and unit volume of polymerization tank, respectively. $VOCl_3$ and ethanol were supplied to the polymerization tank at a rate of 31.0 mg/(hr·L) and 14.9 mg/(hr·L), respectively, after being mixed and stirred with a line mixer. Ethylaluminum sesquichloride (EASC)

and hydrogen were supplied to the polymerization tank at a rate of 176.7 mg/(hr·L) and 0.140 NL/(hr·L). Furthermore, 5-ethylidene-2-norbornene was supplied to the polymerization tank at a rate of 2.8 g/(hr·L). The temperature of the polymerization tank was kept at 42°C. An ethylene-propylene-5-ethylidene-2-norbornene copolymer rubber (hereinafter also referred to as a "copolymer rubber-L") was generated in this polymerization tank at 31 g/(hr·L) per unit time and unit volume of polymerization tank.

The content of the ethylene unit was 48% by mass and the content of the propylene unit was 52% by mass when the sum of the content of the ethylene unit and the content of the propylene unit in the copolymer rubber-L thus obtained was taken as 100% by mass. The product of the monomer reactivity ratios of the copolymer rubber-L was 0.34.

Preparation of Rubber Composition and Production of Molded Body

A small specimen of a molded body was fabricated in the same manner as in (Preparation of Rubber Composition) and (Production of Molded Body) of Example 2 except that the copolymer rubber-L was used instead of the copolymer rubber-A.

Example 6

(Production of Copolymer Rubber)

Hexane, ethylene, and propylene were supplied to a first polymerization tank which was made of stainless steel and equipped with a stirrer at a rate of 882.3 g/(hr·L), 19.5 g/(hr·L), and 93.8 g/(hr·L) per unit time and unit volume of polymerization tank, respectively. $VOCl_3$ and ethanol were supplied to the polymerization tank at a rate of 54.8 mg/(hr·L) and 26.3 mg/(hr·L), respectively, after being mixed and stirred with a line mixer. Ethylaluminum sesquichloride (EASC) and hydrogen were supplied to the polymerization tank at a rate of 312.2 mg/(hr·L) and 0.030 NL/(hr·L). Furthermore, 5-ethylidene-2-norbornene was supplied to the polymerization tank at a rate of 4.6 g/(hr·L). The temperature of the polymerization tank was kept at 42°C. An ethylene-propylene-5-ethylidene-2-norbornene copolymer rubber (hereinafter also referred to as a "copolymer rubber-M") was generated in this polymerization tank at 31 g/(hr·L) per unit time and unit volume of polymerization tank.

The content of the ethylene unit was 48% by mass and the content of the propylene unit was 52% by mass when the sum of the content of the ethylene unit and the content of the propylene unit in the copolymer rubber-M thus obtained was taken as 100% by mass. The product of the monomer reactivity ratios of the copolymer rubber-M was 0.36.

Preparation of Rubber Composition and Production of Molded Body

A small specimen of a molded body was fabricated in the same manner as in (Preparation of Rubber Composition) and (Production of Molded Body) of Example 2 except that the copolymer rubber-M was used instead of the copolymer rubber-A.

Comparative Example 1

Production of Copolymer Rubber

Hexane, ethylene, and propylene were supplied to a first polymerization tank which was made of stainless steel and equipped with a stirrer at a rate of 448.3 g/(hr·L), 12.9 g/(hr·L), and 64.6 g/(hr·L) per unit time and unit volume of polymerization tank, respectively. $VOCl_3$, ethylaluminum sesquichloride (EASC), and hydrogen were supplied to the polymerization tank at a rate of 26.3 mg/(hr·L), 68.5 mg/(hr·L), and 0.020 NL/(hr·L), respectively. The temperature of the polymerization tank was kept at 41°C.

The polymerization solution withdrawn from the first polymerization tank was supplied to a second polymerization tank which was made of stainless steel and equipped with a stirrer and had the same volume as the first polymerization tank. Hexane, ethylene, and propylene were supplied to the second polymerization tank at a rate of 132.6 g/(hr·L), 7.4 g/(hr·L), and 53.0 g/(hr·L) per unit time and unit volume of polymerization tank, respectively. $VOCl_3$ and ethylaluminum sesquichloride (EASC) were supplied to the second polymerization tank at a rate of 16.6 mg/(hr·L) and 33.3 mg/(hr·L), respectively. The temperature of the second polymerization tank was kept at 45°C. An ethylene-propylene copolymer rubber (hereinafter also referred to as a "copolymer rubber-D") was generated in the second polymerization tank at 34 g/(hr·L) per unit time and unit volume of polymerization tank.

The polymerization solution withdrawn from the second polymerization tank was analyzed, and as a result, the content of the ethylene unit was 48% by mass and the content of the propylene unit was 52% by mass when the sum of the content of the ethylene unit and the content of the propylene unit in the copolymer rubber-D thus obtained was

taken as 100% by mass. The product of the monomer reactivity ratios of the copolymer rubber-D was 0.74.

Preparation of Rubber Composition and Production of Molded Body

A small specimen of a molded body was fabricated in the same manner as in (Preparation of Rubber Composition) and (Production of Molded Body) of Example 1 except that the copolymer rubber-D was used instead of the copolymer rubber-A.

Comparative Example 2

A small specimen of a molded body was fabricated in the same manner as in (Preparation of Rubber Composition) and (Production of Molded Body) of Example 2 except that the copolymer rubber-D was used instead of the copolymer rubber-A.

Comparative Example 3

Production of Copolymer Rubber

Hexane, ethylene, and propylene were supplied to a first polymerization tank which was made of stainless steel and equipped with a stirrer at a rate of 491.0 g/(hr·L), 18.5 g/(hr·L), and 45.4 g/(hr·L) per unit time and unit volume of polymerization tank, respectively. $VOCl_3$, ethylaluminum sesquichloride (EASC), and hydrogen were supplied to the polymerization tank at a rate of 15.5 mg/(hr·L), 93.1 mg/(hr·L), and 0.038 NL/(hr·L), respectively. Furthermore, 5-ethylidene-2-norbornene was supplied to the polymerization tank at a rate of 0.3 g/(hr·L).

The temperature of the polymerization tank was kept at 45°C.

The polymerization solution withdrawn from the first polymerization tank was supplied to a second polymerization tank which was made of stainless steel and equipped with a stirrer and had the same volume as the first polymerization tank. Hexane, ethylene, and propylene were supplied to the second polymerization tank at a rate of 131.8 g/(hr·L), 10.9 g/(hr·L), and 38.2 g/(hr·L) per unit time and unit volume of polymerization tank, respectively. $VOCl_3$ and ethylaluminum sesquichloride (EASC) were supplied to the second polymerization tank at a rate of 15.8 mg/(hr·L) and 47.3 mg/(hr·L), respectively. Furthermore, 5-ethylidene-2-norbornene was supplied to the second polymerization tank at a rate of 4.0 g/(hr·L). The temperature of the second polymerization tank was kept at 56°C. An ethylene-propylene-5-ethylidene-2-norbornene copolymer rubber (hereinafter also referred to as a "copolymer rubber-E") was generated in the second polymerization tank at 43 g/(hr·L) per unit time and unit volume of polymerization tank.

The polymerization solution withdrawn from the second polymerization tank was analyzed, and as a result, the content of the ethylene unit was 68% by mass and the content of the propylene unit was 32% by mass when the sum of the content of the ethylene unit and the content of the propylene unit in the copolymer rubber-E thus obtained was taken as 100% by mass. The product of the monomer reactivity ratios of the copolymer rubber-E was 0.50.

Preparation of Rubber Composition and Production of Molded Body

A small specimen of a molded body was fabricated in the same manner as in (Preparation of Rubber Composition) and (Production of Molded Body) of Example 1 except that the copolymer rubber-E was used instead of the copolymer rubber-A.

Comparative Example 4

Production of Copolymer Rubber

Hexane, ethylene, and propylene were supplied to a first polymerization tank which was made of stainless steel and equipped with a stirrer at a rate of 425.5 g/(hr·L), 19.8 g/(hr·L), and 49.3 g/(hr·L) per unit time and unit volume of polymerization tank, respectively. $VOCl_3$, ethylaluminum sesquichloride (EASC), and hydrogen were supplied to the polymerization tank at a rate of 30.0 mg/(hr·L), 150.2 mg/(hr·L), and 0.029 NL/(hr·L), respectively. Furthermore, 5-ethylidene-2-norbornene was supplied to the polymerization tank at a rate of 1.2 g/(hr·L). The temperature of the polymerization tank was kept at 54°C.

The polymerization solution withdrawn from the first polymerization tank was supplied to a second polymerization tank which was made of stainless steel and equipped with a stirrer and had the same volume as the first polymerization tank. Hexane, ethylene, and propylene were supplied to the second polymerization tank at a rate of 124.9 g/(hr·L), 12.3 g/(hr·L), and 42.9 g/(hr·L) per unit time and unit volume of polymerization tank, respectively. $VOCl_3$ and ethylaluminum

sesquichloride (EASC) were supplied to the second polymerization tank at a rate of 20.2 mg/(hr·L) and 40.4 mg/(hr·L), respectively. Furthermore, 5-ethylidene-2-norbornene was supplied to the second polymerization tank at a rate of 0.3 g/(hr·L). The temperature of the second polymerization tank was kept at 59°C. An ethylene-propylene-5-ethylidene-2-norbornene copolymer rubber (hereinafter also referred to as a "copolymer rubber-F") was generated in the second polymerization tank at 47 g/(hr·L) per unit time and unit volume of polymerization tank.

The polymerization solution withdrawn from the second polymerization tank was analyzed, and as a result, the content of the ethylene unit was 69% by mass and the content of the propylene unit was 31% by mass when the sum of the content of the ethylene unit and the content of the propylene unit in the copolymer rubber-F thus obtained was taken as 100% by mass. The product of the monomer reactivity ratios of the copolymer rubber-F was 0.40.

Preparation of Rubber Composition and Production of Molded Body

A small specimen of a molded body was fabricated in the same manner as in (Preparation of Rubber Composition) and (Production of Molded Body) of Example 2 except that the copolymer rubber-F was used instead of the copolymer rubber-A.

Comparative Example 5

Production of Copolymer Rubber

Hexane, ethylene, and propylene were supplied to a first polymerization tank which was made of stainless steel and equipped with a stirrer at a rate of 332.1 g/(hr·L), 18.3 g/(hr·L), and 71.2 g/(hr·L) per unit time and unit volume of polymerization tank, respectively. $VOCl_3$, ethylaluminum sesquichloride (EASC), and hydrogen were supplied to the polymerization tank at a rate of 41.2 mg/(hr·L), 247.5 mg/(hr·L), and 0.028 NL/(hr·L), respectively. Furthermore, 5-ethylidene-2-norbornene was supplied to the polymerization tank at a rate of 1.7 g/(hr·L). The temperature of the polymerization tank was kept at 41°C.

The polymerization solution withdrawn from the first polymerization tank was supplied to a second polymerization tank which was made of stainless steel and equipped with a stirrer and had the same volume as the first polymerization tank. Hexane, ethylene, and propylene were supplied to the second polymerization tank at a rate of 110.7 g/(hr·L), 10.5 g/(hr·L), and 57.9 g/(hr·L) per unit time and unit volume of polymerization tank, respectively. $VOCl_3$ and ethylaluminum sesquichloride (EASC) were supplied to the second polymerization tank at a rate of 27.8 mg/(hr·L) and 83.5 mg/(hr·L), respectively. Furthermore, 5-ethylidene-2-norbornene was supplied to the second polymerization tank at a rate of 0.5 g/(hr·L). The temperature of the second polymerization tank was kept at 46°C. An ethylene-propylene-5-ethylidene-2-norbornene copolymer rubber (hereinafter also referred to as a "copolymer rubber-G") was generated in the second polymerization tank at 49 g/(hr·L) per unit time and unit volume of polymerization tank.

The polymerization solution withdrawn from the second polymerization tank was analyzed, and as a result, the content of the ethylene unit was 52% by mass and the content of the propylene unit was 48% by mass when the sum of the content of the ethylene unit and the content of the propylene unit in the copolymer rubber-G thus obtained was taken as 100% by mass. The product of the monomer reactivity ratios of the copolymer rubber-G was 0.53.

Preparation of Rubber Composition and Production of Molded Body

A small specimen of a molded body was fabricated in the same manner as in (Preparation of Rubber Composition) and (Production of Molded Body) of Example 2 except that the copolymer rubber-G was used instead of the copolymer rubber-A.

The heat resistance of the molded body of the rubber composition thus obtained was evaluated by the method described above, and as a result, the rate of change in breaking elongation of the molded body by a heat treatment was -96%.

Comparative Example 6

Production of Copolymer Rubber

Hexane, ethylene, and propylene were supplied to a first polymerization tank which was made of stainless steel and equipped with a stirrer at a rate of 458.6 g/(hr·L), 14.1 g/(hr·L), and 56.0 g/(hr·L) per unit time and unit volume of polymerization tank, respectively. $VOCl_3$, ethylaluminum sesquichloride (EASC), and hydrogen were supplied to the polymerization tank at a rate of 31.9 mg/(hr·L), 127.6 mg/(hr·L), and 0.030 NL/(hr·L), respectively. Furthermore, 5-ethylidene-2-norbornene was supplied to the polymerization tank at a rate of 3.2 g/(hr·L). The temperature of the polymerization tank was kept at 41°C.

The polymerization solution withdrawn from the first polymerization tank was supplied to a second polymerization

tank which was made of stainless steel and equipped with a stirrer and had the same volume as the first polymerization tank. Hexane, ethylene, and propylene were supplied to the second polymerization tank at a rate of 123.7 g/(hr·L), 8.3 g/(hr·L), and 47.3 g/(hr·L) per unit time and unit volume of polymerization tank, respectively. $VOCl_3$ and ethylaluminum sesquichloride (EASC) were supplied to the second polymerization tank at a rate of 31.0 mg/(hr·L) and 62.0 mg/(hr·L), respectively. Furthermore, 5-ethylidene-2-norbornene was supplied to the second polymerization tank at a rate of 1.0 g/(hr·L). The temperature of the second polymerization tank was kept at 49°C. An ethylene-propylene-5-ethylidene-2-norbornene copolymer rubber (hereinafter also referred to as a "copolymer rubber-H") was generated in the second polymerization tank at 43 g/(hr·L) per unit time and unit volume of polymerization tank.

The polymerization solution withdrawn from the second polymerization tank was analyzed, and as a result, the content of the ethylene unit was 55% by mass and the content of the propylene unit was 45% by mass when the sum of the content of the ethylene unit and the content of the propylene unit in the copolymer rubber-H thus obtained was taken as 100% by mass. The product of the monomer reactivity ratios of the copolymer rubber-H was 0.56.

Preparation of Rubber Composition and Production of Molded Body

A small specimen of a molded body was fabricated in the same manner as in (Preparation of Rubber Composition) and (Production of Molded Body) of Example 2 except that the copolymer rubber-H was used instead of the copolymer rubber-A.

Comparative Example 7

A copolymer rubber with a trade name of "Mitsui EPT 9090M" manufactured by Mitsui Chemicals, Inc. was prepared as a copolymer rubber-I. A small specimen of a molded body was fabricated in the same manner as in Example 1 except that 100 parts by mass of the copolymer rubber-I, 1 part by mass of 2-mercaptobenzimidazole (trade name "ANTAGE MB" manufactured by KAWAGUCHI CHEMICAL INDUSTRY CO., LTD.) as the component (C), 100 parts by mass of carbon black (trade name "Asahi #50G" manufactured by ASAHI CARBON CO., LTD.), 60 parts by mass of process oil (trade name "Diana Process Oil PW-380" manufactured by Idemitsu Kosan Co., Ltd.), 0.5 part by mass of a 2,2,4-trimethyl-1,2-dihydroquinoline polymer (trade name "ANTAGE RD" manufactured by KAWAGUCHI CHEMICAL INDUSTRY CO., LTD.), 5 parts by mass of zinc oxide (trade name "Zinc Oxide II" manufactured by SEIDO CHEMICAL INDUSTRY CO., LTD.), and 1 part by mass of stearic acid (trade name "Stearic Acid 50S" manufactured by New Japan Chemical Co., Ltd.) were used.

Comparative Example 8

A copolymer rubber with a trade name of "Mitsui EPT 8030M" manufactured by Mitsui Chemicals, Inc. was prepared as a copolymer rubber-J. A small specimen of a molded body was fabricated in the same manner as in Comparative Example 7 except that the copolymer rubber-J was used instead of the copolymer rubber-I.

Comparative Example 9

A copolymer rubber with a trade name of "Vistalon 8600" manufactured by Exxon Mobil Corporation was prepared as a copolymer rubber-K. A small specimen of a molded body was fabricated in the same manner as in Comparative Example 7 except that the copolymer rubber-K was used instead of the copolymer rubber-I.

The details of the copolymer rubbers used in Examples and Comparative Examples are presented in the following Table 1. The blended proportion (unit: part by mass) of the rubber compositions and the evaluation results on the cold resistance of the molded bodies formed of the rubber compositions in Examples and Comparative Examples are presented in the following Tables 2 and 3.

Table 1

| | Item | Content of propylene unit (% by mass) | Product of monomer reactivity ratios | Iodine value (g/ 100 g) | Intrinsic viscosity (dl/g) | Mw/Mn | Peak top temperature (°C) | Peak height (dW/dT) | Proportion of elution amount in temperature region higher than 40°C (% by mass) | T(80) - T(20) (°C) |
|---|---|---|---|---|---|---|---|---|---|---|
| Component (A) | Copolymer rubber-A | 56 | 0.34 | 0 | 2.18 | 2.1 | 21.5 | 5.3 | 6.7 | 13.5 |
| | Copolymer rubber-B | 64 | 0.34 | 0 | 2.08 | 2.1 | 5.0 | 4.9 | 4.1 | 14.5 |
| | Copolymer rubber-C | 53 | 0.36 | 9 | 2.28 | 2.2 | 25.0 | 5.1 | 7.1 | 13.5 |
| | Copolymer rubber-L | 52 | 0.34 | 8 | 1.51 | 2.0 | 29.0 | 4.9 | 7.8 | 14.5 |
| | Copolymer rubber-M | 52 | 0.36 | 19 | 1.51 | 2.3 | 25.0 | 4.6 | 5.1 | 15.5 |
| Alternative componentto component (A) | Copolymer rubber-D | 52 | 0.74 | 0 | 1.89 | 2.4 | 25.5 | 3.2 | 22.5 | 36.0 |
| | Copolymer rubber-E | 32 | 0.50 | 4 | 2.20 | 2.2 | 71.5 | 5.1 | 87.1 | 16.5 |
| | Copolymer rubber-F | 31 | 0.40 | 10 | 1.83 | 2.4 | 71.5 | 5.1 | 87.7 | 16.5 |
| | Copolymer rubber-G | 48 | 0.53 | 9 | 2.26 | 3.0 | 39.0 | 4.4 | 53.1 | 23.0 |
| | Copolymer rubber-H | 45 | 0.56 | 19 | 1.78 | 3.3 | 41.0 | 4.3 | 56 | 17.5 |
| | Copolymer rubber-I | 58 | 1.24 | 23 | 1.76 | 3.1 | 29.0 | 4.4 | 8.9 | 16.5 |
| | Copolymer rubber-J | 53 | 1.41 | 20 | 1.37 | 3.8 | 41.0 | 3.8 | 45.6 | 18.5 |
| | Copolymer rubber-K | 47 | 0.35 | 20 | 2.08 | 3.5 | 31.5 | 1.8 | 54.5 | 38.5 |

Table 2

| Item | | | Example 1 | Example 2 | Example 3 | Example 4 | Example 5 | Example 6 |
|---|---|---|---|---|---|---|---|---|
| Blended proportion of rubber composition | Component (A) | Copolymer rubber-A | 100 | 100 | - | - | - | - |
| | | Copolymer rubber-B | - | - | 100 | - | - | - |
| | | Copolymer rubber-C | - | - | - | 100 | - | - |
| | | Copolymer rubber-L | - | - | - | - | 100 | - |
| | | Copolymer rubber-M | - | - | - | - | - | 100 |
| | Component (B) | NOCRAC CD | 2 | 2 | 2 | 2 | 2 | 2 |
| | Component (C) | ANTAGE MB | 8 | 8 | 8 | 8 | 8 | 8 |
| | Other add itives | Carbon black | 40 | 95 | 40 | 95 | 95 | 95 |
| | | Process oil | - | 40 | - | 40 | 40 | 40 |
| | | Zinc oxide | 5 | 5 | 5 | 5 | 5 | 5 |
| | | Stearic acid | 1 | 1 | 1 | 1 | 1 | 1 |
| | | PERCUMYL D-40 | 6.75 | 6.75 | 6.75 | 6.75 | 6.75 | 6.75 |
| | | Acryester ED | 2 | 2 | 2 | 2 | 2 | 2 |
| Evaluation | Cold resistance (compression set at -30°C (%)) | | 45 | 53 | 53 | 54 | 54 | 51 |

Table 3

| Item | | | Comp. Example 1 | Comp. Example 2 | Comp. Example 3 | Comp. Example 4 | Comp. Example 5 | Comp. Example 6 | Comp. Example 7 | Comp. Example 8 | Comp. Example 9 |
|---|---|---|---|---|---|---|---|---|---|---|---|
| Blended proportion of rubber composition | Alternative component to component (A) | Copolymer rubber-D | 100 | 100 | - | - | - | - | - | - | - |
| | | Copolymer rubber-E | - | - | 100 | - | - | - | - | - | - |
| | | Copolymer rubber-F | - | - | - | 100 | - | - | - | - | - |
| | | Copolymer rubber-G | - | - | - | - | 100 | - | - | - | - |
| | | Copolymer rubber-H | - | - | - | - | - | 100 | - | - | - |
| | | Copolymer rubber-I | - | - | - | - | - | - | 100 | - | - |
| | | Copolymer rubber-J | - | - | - | - | - | - | - | 100 | - |
| | | Copolymer rubber-K | - | - | - | - | - | - | - | - | 100 |
| | Component (B) | NOCRAC CD | 2 | 2 | 2 | 2 | 2 | 2 | - | - | - |
| | Component (C) | ANTAGE MB | 8 | 8 | 8 | 8 | 8 | 8 | 1 | 1 | 1 |
| | Other additive | Carbon black | 40 | 95 | 40 | 95 | 95 | 95 | 100 | 100 | 100 |
| | | Process oil | - | 40 | - | 40 | 40 | 40 | 60 | 60 | 60 |
| | | ANTAGE RD | - | - | - | - | - | - | 0.5 | 0.5 | 0.5 |
| | | Zinc oxide | 5 | 5 | 5 | 5 | 5 | 5 | 5 | 5 | 5 |
| | | Stearic acid | 1 | 1 | 1 | 1 | 1 | 1 | 1 | 1 | 1 |
| | | PERCUMYL D-40 | 6.75 | 6.75 | 6.75 | 6.75 | 6.75 | 6.75 | 6.75 | 6.75 | 6.75 |
| | | Acryester ED | 2 | 2 | 2 | 2 | 2 | 2 | 2 | 2 | 2 |

(continued)

| Item | | Comp. Example 1 | Comp. Example 2 | Comp. Example 3 | Comp. Example 4 | Comp. Example 5 | Comp. Example 6 | Comp. Example 7 | Comp. Example 8 | Comp. Example 9 |
|---|---|---|---|---|---|---|---|---|---|---|
| Evaluation | Cold resistance (compression set at -30°C (%)) | 69 | 75 | 100 | 97 | 67 | 70 | 64 | 77 | 66 |

From the results in Tables 2 and 3, it has been confirmed that the molded bodies of Examples formed of the rubber compositions containing ethylene-α-olefin-based copolymer rubbers which satisfy the requirements (a) and (b) are superior in cold resistance to the molded bodies of Comparative Examples formed of the rubber compositions containing ethylene-α-olefin-based copolymer rubbers which do not satisfy the requirements (a) and/or (b).

## Claims

1. An ethylene-α-olefin-based copolymer rubber comprising an ethylene unit and an α-olefin unit having from 3 to 20 carbon atoms, wherein
the following requirements (a) and (b) are satisfied:

   requirement (a): a content of the α-olefin unit is 50% by mass or more and 70% by mass or less when a sum of a content of the ethylene unit and the content of the α-olefin unit is taken as 100% by mass;
   requirement (b): a product of monomer reactivity ratios that is a product of a reactivity ratio of ethylene and a reactivity ratio of an α-olefin is 0.70 or less, and the product of monomer reactivity ratios is a value determined from a $^{13}$C-NMR spectrum.

2. The ethylene-α-olefin-based copolymer rubber according to claim 1, wherein a proportion of an integral elution amount from -15°C to 40°C with respect to a total elution amount is 80% or more and 100% or less when an elution amount of the ethylene-α-olefin-based copolymer rubber is measured at each elution temperature while stepwisely increasing the elution temperature from -15°C to 160°C by temperature gradient interaction chromatography.

3. The ethylene-α-olefin-based copolymer rubber according to claim 1 or 2, further comprising a nonconjugated polyene unit.

4. A rubber composition comprising the ethylene-α-olefin-based copolymer rubber according to any one of claims 1 to 3.

5. The rubber composition according to claim 4, further comprising an amine-based antioxidant and/or a sulfur-based antioxidant.

6. A method for producing an ethylene-α-olefin-based copolymer rubber comprising an ethylene unit and an α-olefin unit and satisfuying a requirement (a): a content of the α-olefin unit is 50% by mass or more and 70% by mass or less when a sum of a content of the ethylene unit and the content of the α-olefin unit is taken as 100% by mass, the method comprising:

   a step of copolymerizing a monomer mixture containing ethylene and an α-olefin in the presence of a catalyst obtained by bringing a vanadium compound represented by the following formula (1) into contact with an organic aluminum compound represented by the following formula (2):

   $$VO(OR)_mX_{3-m} \;.....\qquad (1)$$

   wherein R represents a linear hydrocarbon group having from 1 to 8 carbon atoms, X represents a halogen atom, and m represents a number satisfying $0 < m \leq 3$,

   $$R''_jAlX''_{3-j} \;.....\qquad (2)$$

   wherein R" represents a hydrocarbon group, X" represents a halogen atom, and j represents a number satisfying $0 < j \leq 3$.

7. The method according to claim 6, wherein a proportion of an integral elution amount from -15°C to 40°C with respect to a total elution amount is 80% or more and 100% or less when an elution amount of the ethylene-α-olefin-based copolymer rubber is measured at each elution temperature while stepwisely increasing the elution temperature from -15°C to 160°C by temperature gradient interaction chromatography.

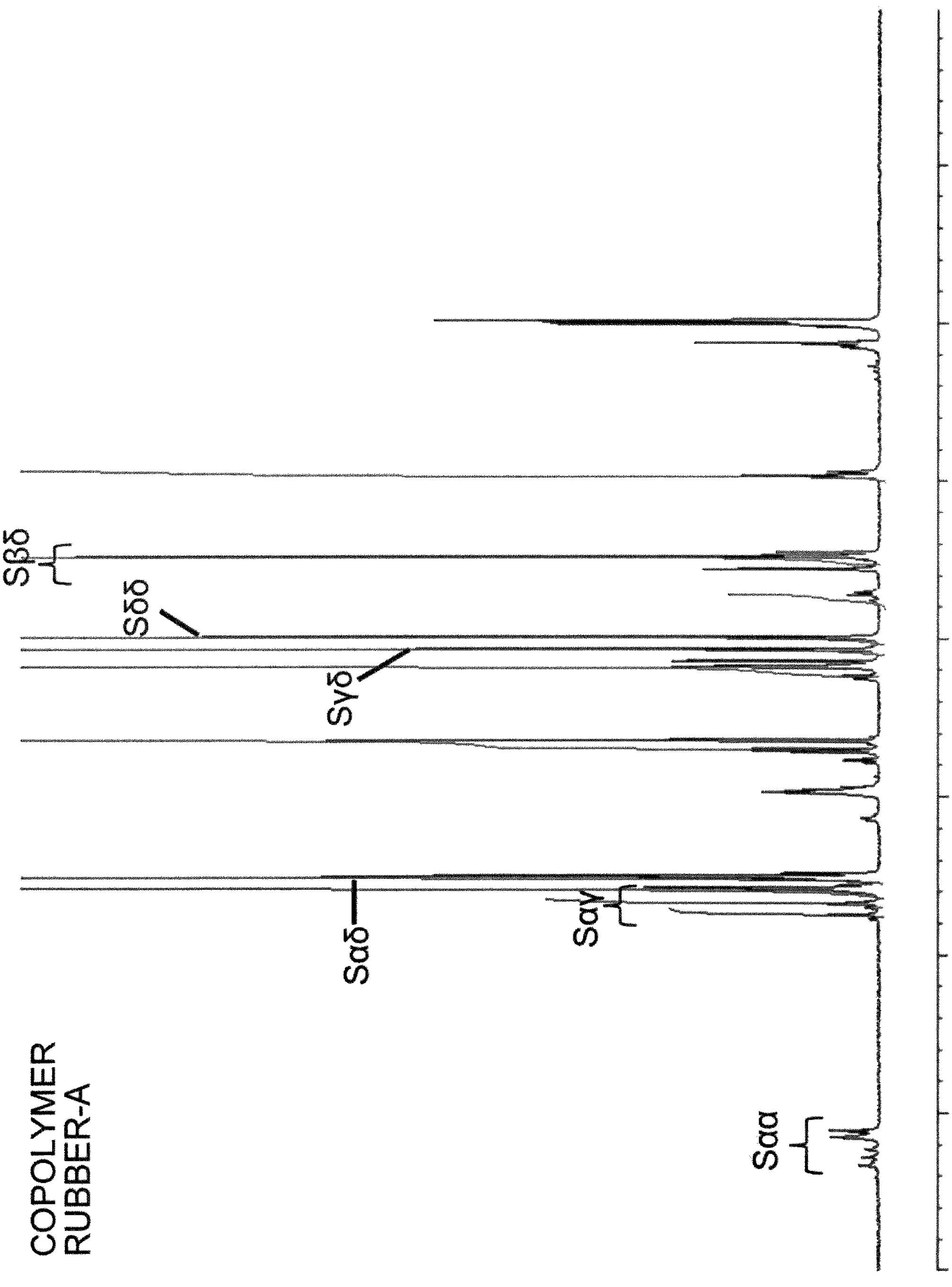
COPOLYMER
RUBBER-A
Sαα
Sαγ
Sαδ
Sγδ
Sδδ
Sβδ
45
40
35
30
25
20
15
ppm

*Fig.1*

Fig.2

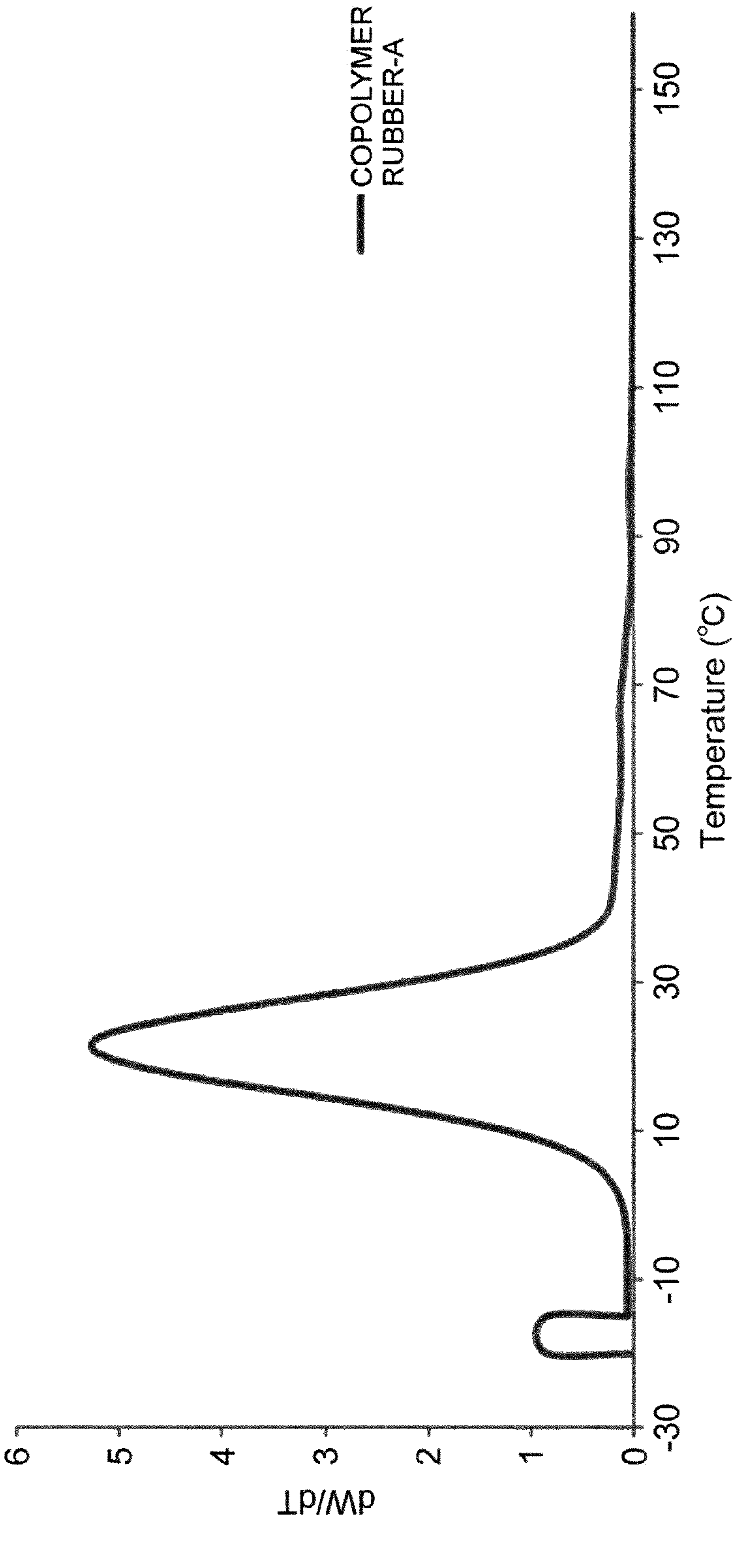
COPOLYMER RUBBER-A
dW/dT
6
5
4
3
2
1
0
-30
-10
10
30
50
70
90
110
130
150
Temperature (°C)

**INTERNATIONAL SEARCH REPORT**

International application No.
PCT/JP2016/073349

A. CLASSIFICATION OF SUBJECT MATTER
*C08L23/16*(2006.01)i, *C08F4/68*(2006.01)i, *C08F210/06*(2006.01)i, *C08K5/17*(2006.01)i

According to International Patent Classification (IPC) or to both national classification and IPC

B. FIELDS SEARCHED

Minimum documentation searched (classification system followed by classification symbols)
C08L23/00-23/36, C08F4/00-4/82, C08F210/00-210/18, C08K5/00-5/59

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)
JSTPlus/JMEDPlus/JST7580(JDreamIII), CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| A | JP 2014-95073 A (Sumitomo Chemical Co., Ltd.), 22 May 2014 (22.05.2014), entire text (Family: none) | 1-7 |
| A | JP 2010-222574 A (Sumitomo Chemical Co., Ltd.), 07 October 2010 (07.10.2010), entire text (Family: none) | 1-7 |
| A | JP 2006-249401 A (Sumitomo Chemical Co., Ltd.), 21 September 2006 (21.09.2006), entire text & US 2006/0178492 A1 entire text & DE 102005059774 A & KR 10-2006-0090565 A & CN 1824697 A | 1-7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 17 August 2016 (17.08.16) | 30 August 2016 (30.08.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

INTERNATIONAL SEARCH REPORT

International application No. PCT/JP2016/073349

C (Continuation). DOCUMENTS CONSIDERED TO BE RELEVANT

| Category* | Citation of document, with indication, where appropriate, of the relevant passages | Relevant to claim No. |
|---|---|---|
| A | JP 2003-40934 A (Sumitomo Chemical Co., Ltd.), 13 February 2003 (13.02.2003), entire text (Family: none) | 1-7 |
| A | JP 2002-146133 A (Mitsui Chemicals, Inc.), 22 May 2002 (22.05.2002), entire text (Family: none) | 1-7 |
| A | JP 7-53801 A (Japan Synthetic Rubber Co., Ltd.), 28 February 1995 (28.02.1995), entire text (Family: none) | 1-7 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H7126326 B


### Non-patent literature cited in the description


- **F. W. BILLMEYER, JR.** Textbook of Polymer Chemistry. Interscience Publishers, 1957, 221
- **KAKUGO et al.** *Macromolecules,* 1982, vol. 15, 1150-1152
- **CONG et al.** *Macromolecules,* 2011, vol. 44 (8), 3062-3072
- Handbook of Rubber/Plastics Combined Chemicals. Rubber Digest Co., Ltd, 20 April 1981
- **TAKAYAMA, USAMI.** *Characterization of Polyethylene by Infrared Absorption Spectrum*
- **MC RAE, M.A. ; MADDAM S, W. F.** *Die Makromolekulare Chemie,* 1976, vol. 177, 461
- Polymer Solutions and Polymer Experiments 11. Kyoritsu Shuppan Co., Ltd, 1982, 491